# EUROPEAN PATENT APPLICATION

(11) **EP 1 667 335 A2**
(43) Date of publication of application: **07.06.2006**
(21) Application number: 05026367.2
(22) Date of filing: 02.12.2005
(51) Int. Cl.: H04B 1/40

(54) **Multi-mode transmitter circuit for switching over between TDMA mode and CDMA mode**

(30) Priority: 03.12.2004 JP 2004350987; 23.03.2005 JP 2005084275
(71) Applicant: MATSUSHITA ELECTRIC INDUSTRIAL CO., LTD., Kadoma-shi, Osaka 571-8501 (JP)
(72) Inventor: Ishida, Kaoru, Shijonawate-shi Osaka 575-0013 (JP)
(74) Representative: Eisenführ, Speiser & Partner

(57) **Abstract**

A multi-mode transmitter circuit is provided for selectively switching over between a TDMA mode and a CDMA mode, where a transmission frequency of the CDMA mode is substantially identical to a transmission frequency of the TDMA mode. In the TDMA and CDMA modes, a filter device attenuates frequency band components other than a transmission frequency band of a phase-modulated signal, and filters an attenuated phase-modulated signal to pass therethrough a filtered phase-modulated signal. In the TDMA mode, an amplitude modulator generates a transmitting radio signal by modulating an amplitude of the phase-modulated signal according to an amplitude component of the inputted signal to be modulated, and in the CDMA mode, the amplitude modulator outputs the phase-modulated signal as a transmitting radio signal.

## Description

### BACKGROUND OF THE INVENTION

### 1. FIELD OF THE INVENTION

The present invention relates to a multi-mode transmitter circuit, a multi-mode transceiver circuit including a multi-mode receiver circuit and the multi-mode transmitter circuit, and a radio communication apparatus including the multi-mode transceiver circuit. In particular, the present invention relates to a multi-mode transmitter circuit for switching between a TDMA (Time Division Multiple Access) mode such as a GSM (Global System for Mobile Communication) system and a CDMA (Code Division Multiple Access) mode such as a WCDMA (Wideband Code Division Multiple Access) system and a CDMA 2000 system and transmitting a signal, a multi-mode transceiver circuit including a multi-mode receiver circuit and the multi-mode transmitter circuit, and a radio communication apparatus including the multi-mode transceiver circuit.

### 2. DESCRIPTION OF THE RELATED ART

In recent years, a mobile telephone has been developed and put to practical use, where the mobile telephone has a multi-mode radio communication function for selectively switching over between the TDMA mode such as the GSM system as called the second generation, and the CDMA mode as called the third generation.

Presently, in such a transmitter employing a TDMA system such as the GSM system and an EDGE (Enhanced Data Rates for GSM Evolution) system, such an architecture having been known as a polar modulation is used (See, for example, a prior art document of Brent Wilkins, "GSM/GPRS/EDGE Chips Form Triband Transceiver", Microwaves & RF, March 2002). In addition, in the GSM system and the EDGE system, a mobile telephone system has been established by using a quad-band that employs four bands in total, that is, two bands located in an 800 MHz band and two bands located in a 1.8 GHz band. In order to make use of both of the 800 MHz band and the 1.8 GHz band, the transmitter is actually constituted by including transmitter circuits of these two systems, respectively. In contrast, in such a transmitter employing a CDMA system, such an architecture having known as an orthogonal modulation is used.

In order to constitute a multi-mode transmitter circuit for switching over among a plurality of different architectures as described, a multi-mode transmitter circuit according to a prior art was constituted by including a plurality of exclusive-use architectures for respective transmitter circuits and by using a method of selectively switching over among a plurality of architectures (See, for example, Japanese patent laid-open publication No. 2002-543658).

However, in a multi-mode transmitter circuit having the above-mentioned configuration and having the TDMA mode and the CDMA mode, it is necessary to constitute the same circuit by concurrently including different architectures even when the architectures utilize the same transmission frequency band, and this results in extremely large increase in the size of the circuit and in the number of parts used therein.

In addition, the system of the TDMA mode adopted such a configuration without any low-pass filter. Accordingly, in order to suppress interference in the reception band, it is necessary to implement a large signal to noise ratio in the transmitter circuit, resulting in increase in the current consumption.

### SUMMARY OF THE INVENTION

An object of the present invention is therefore to provide a multi-mode transmitter circuit having the TDMA and the CDMA modes, capable of solving the above-mentioned problems, capable of decreasing its size as compared with that of a multi-mode transmitter circuit according to the prior art, and capable of reducing the current consumption lower than that of the multi-mode transmitter circuit according to the prior art.

Another object of the present invention is to further provide a multi-mode transceiver circuit including a multi-mode receiver circuit and the multi-mode transmitter circuit and a radio communication apparatus including the multi-mode transceiver circuit.

According to the first aspect of the present invention, there is provided a multi-mode transmitter circuit for selectively switching over between at least one TDMA mode and at least one CDMA mode, where a transmission frequency of the CDMA mode is substantially identical to that of the TDMA mode. The multi-mode transmitter circuit includes phase modulating means, filtering means and amplitude modulating means. In the TDMA mode and the CDMA mode, the phase modulating means generates a phase-modulated signal by modulating a phase of a carrier wave signal according to an inputted signal to be modulated, and outputs the phase-modulated signal. In addition, in the TDMA mode and the CDMA mode, the filtering means attenuates frequency band components other than a transmission frequency band of the phase-modulated signal outputted from the phase modulating means, and filters an attenuated phase-modulated signal to pass therethrough and output a filtered phase-modulated signal. Further, the amplitude modulating means executes the following steps of:
(a) in the TDMA mode, generating a transmitting radio signal by modulating an amplitude of the phase-modulated signal outputted from the filtering means according to an amplitude component of the inputted signal to be modulated, and outputting the transmitting radio signal; and
(b) in the CDMA mode, outputting the phase-modulated signal outputted from the filtering means as a transmitting radio signal.

According to the second aspect of the present invention, there is provided a multi-mode transmitter circuit for selectively switching over between a plurality of TDMA modes including first and second TDMA modes that are different from each other and at least one CDMA mode, where a transmission frequency of the CDMA mode is substantially identical to that of the first TDMA mode. The multi-mode transmitter circuit includes first phase modulating means, second phase modulating means, filtering means, first amplitude modulating means and second amplitude modulating means. In the first TDMA mode and the CDMA mode, the first phase modulating means generates a phase-modulated signal by modulating a phase of a carrier wave signal according to an inputted signal to be modulated, and outputs the phase-modulated signal. In addition, in the second TDMA mode, the second phase modulating means generates a phase-modulated signal by modulating a phase of a carrier wave signal according to the inputted signal to be modulated, and outputs the phase-modulated signal. Further, in the first TDMA mode and the CDMA mode, the filtering means attenuates frequency band components other than a transmission frequency band of the phase-modulated signal outputted from the first phase modulating means, and filters an attenuated phase-modulated signal to pass therethrough and output a filtered phase-modulated signal. Still further, the first amplitude modulating means executes the following steps of:
(a) in the first TDMA mode, generating a transmitting radio signal by modulating an amplitude of the phase-modulated signal outputted from the filtering means according to an amplitude component of the inputted signal to be modulated, and outputting the transmitting radio signal; and
(b) in the CDMA mode, outputting the phase-modulated signal outputted from the filtering means as a transmitting radio signal. In addition, in the second TDMA mode, the second amplitude modulating means generates a transmitting radio signal by modulating an amplitude of the phase-modulated signal outputted from the second phase modulating means according to the amplitude component of the inputted signal to be modulated, and outputs the transmitting radio signal.

In the above-mentioned circuit, the first amplitude modulating means and the second amplitude modulating means preferably shares one amplitude modulating means.

According to the third aspect of the present invention, there is provided a multi-mode transmitter circuit for selectively switching over between a plurality of TDMA modes including first and second TDMA modes that are different from each other and a plurality of CDMA modes including first and second CDMA modes that are different from each other, where transmission frequencies of the first and second CDMA modes are substantially identical to transmission frequencies of the first and second TDMA modes, respectively. The multi-mode transmitter circuit includes phase modulating means, first filtering means, second filtering means and amplitude modulating means. In the first and second TDMA modes and the first and second CDMA modes, the phase modulating means generates a phase-modulated signal by modulating a phase of a carrier wave signal according to an inputted signal to be modulated, and outputs the phase-modulated signal. In addition, in the first TDMA mode and the first CDMA mode, the first filtering means attenuates frequency band components other than a transmission frequency band of the phase-modulated signal outputted from the phase modulating means, and filters an attenuated phase-modulated signal to pass therethrough and output a filtered phase-modulated signal. Further, in the second TDMA mode and the second CDMA mode, the second filtering means attenuates frequency band components other than a transmission frequency band of the phase-modulated signal outputted from the phase modulating means, and filters an attenuated phase-modulated signal to pass therethrough and output a filtered phase-modulated signal. Still further, the amplitude modulating means executes the following steps of:
(a) in the first TDMA mode, generating a transmitting radio signal by modulating an amplitude of the phase-modulated signal outputted from the first filtering means according to an amplitude component of the inputted signal to be modulated, and outputting the transmitting radio signal;
(b) in the second TDMA mode, generating a transmitting radio signal by modulating an amplitude of the phase-modulated signal outputted from the second filtering means according to the amplitude component of an inputted signal to be modulated, and outputting the transmitting radio signal;
(c) in the first CDMA mode, outputting the phase-modulated signal outputted from the first filtering means as a transmitting radio signal; and
(d) in the second CDMA mode, outputting the phase-modulated signal outputted from the second filtering means as a transmitting radio signal.

According to the fourth aspect of the present invention, there is provided a multi-mode transmitter circuit for selectively switching over between a plurality of TDMA modes including first and second TDMA modes, and a plurality of CDMA modes including first and second CDMA modes that are different from each other. A transmission frequency of the second TDMA mode is substantially half a transmission frequency of the first TDMA mode, and transmission frequencies of the first and second CDMA modes are substantially identical to those of the first and second TDMA modes, respectively. The multi-mode transmitter circuit includes phase modulating means, frequency dividing means, first filtering means, first amplitude modulating means and second amplitude modulating means. In the first and second TDMA modes and the first and second CDMA modes, the phase modulating means generates a phase-modulated signal by modulating a phase of a carrier wave signal according to an inputted signal to be modulated, and outputs the phase-modulated signal. In addition, the frequency dividing means divides a frequency of the phase-modulated signal outputted from the phase modulating means into half the frequency thereof, and outputs a frequency-divided phase-modulated signal. Further, in the first TDMA mode and the first CDMA mode, the first filtering means attenuates frequency band components other than a transmission frequency band of the phase-modulated signal outputted from the phase modulating means, and filters an attenuated phase-modulated signal to pass therethrough and output a filtered phase-modulated signal. Still further, the first amplitude modulating means executes the following steps of:
(a) in the first TDMA mode, generating a transmitting radio signal by modulating an amplitude of the phase-modulated signal outputted from the first filtering means according to an amplitude component of the inputted signal to be modulated, and outputting the transmitting radio signal; and
(b) in the first CDMA mode, outputting the phase-modulated signal outputted from the first filtering means as a transmitting radio signal. In addition, the second amplitude modulating means executes the following steps of:
   (a) in the second TDMA mode, generating a transmitting radio signal by modulating an amplitude of the frequency-divided phase-modulated signal outputted from the frequency dividing means according to the amplitude component of the inputted signal to be modulated, and outputting the transmitting radio signal; and
   (b) in the second CDMA mode, outputting the frequency-divided phase-modulated signal outputted from the frequency dividing means as a transmitting radio signal.

According to the fifth aspect of the present invention, there is provided a multi-mode transmitter circuit for selectively switching over between a plurality of TDMA modes including first, second, third and fourth TDMA modes, and a plurality of CDMA modes including first and second CDMA modes that are different from each other. A transmission frequency of the second TDMA mode is substantially half a transmission frequency of the first TDMA mode, and a transmission frequency of the third TDMA mode is shifted from that of the first TDMA mode by a predetermined first frequency shift amount. In addition, a transmission frequency of the fourth TDMA mode is shifted from that of the second TDMA mode by a predetermined second frequency shift amount, and transmission frequencies of the first and second CDMA modes are substantially identical to those of the first and second TDMA modes, respectively. The multi-mode transmitter circuit includes first phase modulating means, second phase modulating means, first frequency dividing means, second frequency dividing means, first filtering means, first amplitude modulating means, second filtering means and second amplitude modulating means. In the first and second TDMA modes and the first and second CDMA modes, the first phase modulating means generates a phase-modulated signal by modulating a phase of a carrier wave signal according to an inputted signal to be modulated, and outputs the phase-modulated signal. In addition, in the third and fourth TDMA modes, the second phase modulating means generates a phase-modulated signal by modulating a phase of a carrier wave signal according to the inputted signal to be modulated, and outputs the phase-modulated signal. Further, the first frequency dividing means divides a frequency of the phase-modulated signal outputted from the first phase modulating means into half the frequency thereof, and outputs a frequency-divided phase-modulated signal. Still further, the second frequency dividing means divides a frequency of the phase-modulated signal outputted from the second phase modulating means into half the frequency thereof, and outputs a frequency-divided phase-modulated signal. In addition, in the first TDMA mode and the first CDMA mode, the first filtering means attenuates frequency band components other than a transmission frequency band of the phase-modulated signal outputted from the first phase modulating means, and filters an attenuated phase-modulated signal to pass therethrough and output a filtered phase-modulated signal. Further, the first amplitude modulating means executes the following steps of:
(a) in the first TDMA mode, generating a transmitting radio signal by modulating an amplitude of the phase-modulated signal outputted from the first filtering means according to an amplitude component of the inputted signal to be modulated, and outputting the transmitting radio signal;
(b) in the first CDMA mode, outputting the phase-modulated signal outputted from the first filtering means; and
(c) in the third TDMA mode, generating a transmitting radio signal by modulating an amplitude of the phase-modulated signal outputted from the second phase modulating means according to the amplitude component of the inputted signal to be modulated, and outputting the transmitting radio signal. Still further, in the second TDMA mode and the second CDMA mode, the second filtering means attenuates frequency band components other than a transmission frequency band of the frequency-divided phase-modulated signal outputted from the first frequency dividing means, and filters an attenuated phase-modulated signal to pass therethrough and output a filtered phase-modulated signal. In addition, the second amplitude modulating means executes the following steps of:
   (a) in the second TDMA mode, generating a transmitting radio signal by modulating an amplitude of the phase-modulated signal outputted from the second filtering means according to the amplitude component of the inputted signal to be modulated, and outputting the transmitting radio signal;
   (b) in the second CDMA mode, outputting the phase-modulated signal outputted from the second filtering means; and
   (c) in the fourth TDMA mode, generating a transmitting radio signal by modulating an amplitude of the frequency-divided phase-modulated signal outputted from the second frequency dividing means according to the amplitude component of the inputted signal to be modulated, and outputting the transmitting radio signal.

In the above-mentioned circuit, each of the filtering means is, preferably, one of a band-pass filter and a band-stop filter.

According to the sixth aspect of the present invention, there is provided a multi-mode transceiver circuit that includes comprising the multi-mode transmitter circuit and a multi-mode receiver circuit. In the respective TDMA modes and the respective CDMA modes, the multi-mode receiver circuit receives a radio signal, frequency-converts a received radio signal, and demodulates a frequency-converted received radio signal.

In the above-mentioned multi-mode transceiver circuit, the multi-mode receiver circuit preferably uses one of phase-modulated signals outputted from the respective phase modulating means and frequency-divided phase-modulated signals outputted from the respective frequency dividing means as a local oscillation signal for the frequency conversion.

According to the seventh aspect of the present invention, there is provided a radio communication apparatus that includes the multi-mode transceiver circuit and an antenna for transmitting and receiving a radio signal. The multi-mode receiver circuit receives a radio signal received by the antenna, converts a frequency of the received radio signal, and demodulates a frequency-converted received radio signal. In addition, the multi-mode transmitter circuit outputs the transmitting radio signal outputted from the multi-mode transmitter circuit to the antenna so as to radiate the transmitting radio signal through the antenna.

According to the present invention, in order to reduce the signal to noise ratio in the multi-mode transmitter circuit, the filtering means is inserted between an output terminal of each of the phase modulating means and an input terminal of each of the amplitude modulating means, where the filtering means attenuates frequency band components other than a transmission frequency band of a phase-modulated signal outputted from the phase modulating means, filters an attenuated phase-modulated signal to pass therethrough and outputs a filtered phase-modulated signal.

Accordingly, the multi-mode transmitter circuit having the TDMA and the CDMA modes can be implemented, where the multi-mode transmitter circuit can reduce its size as compared with that of a multi-mode transmitter circuit according to the prior art, and can reduce the current consumption lower than that of the multi-mode transmitter circuit according to the prior art. Further, there can be implemented the multi-mode transceiver circuit including the multi-mode receiver circuit in addition to the multi-mode transmitter circuit, and there can be implemented a radio communication apparatus including the multi-mode transceiver circuit.

### BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:
Fig. 1 is a block diagram showing a configuration of a radio communication apparatus according to a first preferred embodiment of the present invention;
Fig. 2 is a block diagram showing a configuration of a radio communication apparatus according to a modified preferred embodiment of the first preferred embodiment of the present invention;
Fig. 3 is a block diagram showing a configuration of a radio communication apparatus according to a second preferred embodiment of the present invention;
Fig. 4 is a block diagram showing a configuration of a radio communication apparatus according to a modified preferred embodiment of the second preferred embodiment of the present invention;
Fig. 5 is a block diagram showing a configuration of a radio communication apparatus according to a third preferred embodiment of the present invention;
Fig. 6 is a block diagram showing a configuration of a radio communication apparatus according to a modified preferred embodiment of the third preferred embodiment of the present invention;
Fig. 7 is a block diagram showing a configuration of a radio communication apparatus according to a fourth preferred embodiment of the present invention;
Fig. 8 is a block diagram showing a configuration of a radio communication apparatus according to a modified preferred embodiment of the fourth preferred embodiment of the present invention;
Fig. 9 is a block diagram showing a configuration of a radio communication apparatus according to a fifth preferred embodiment of the present invention;
Fig. 10 is a block diagram showing a configuration of a radio communication apparatus according to a modified preferred embodiment of the fifth preferred embodiment of the present invention; and
Fig. 11 is a block diagram showing a configuration of a radio communication apparatus according to another modified preferred embodiment of the second preferred embodiment of the present invention.

### DETAILED DESCRIPTION OF THE PREFERRED EMBODIMENTS

Preferred embodiments according to the present invention will be described below with reference to the attached drawings. Components similar to each other are denoted by the same reference numerals, respectively.

### FIRST PREFERRED EMBODIMENT

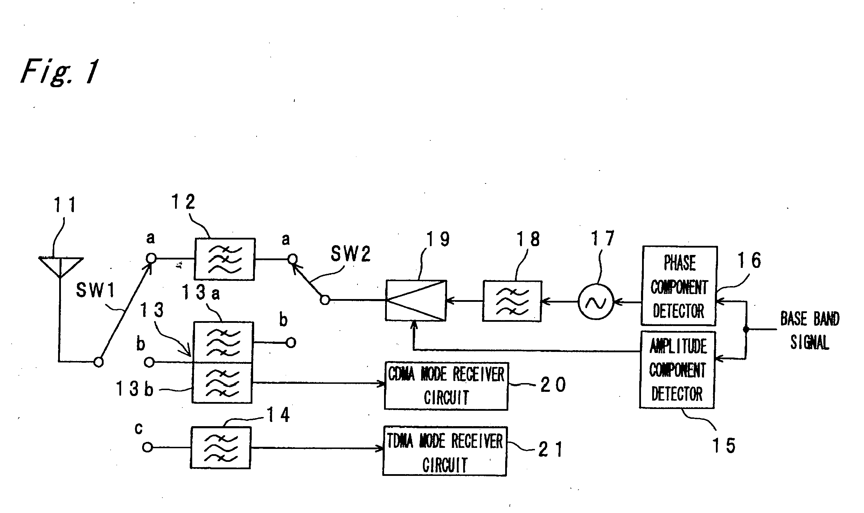

Fig. 1 is a block diagram showing a configuration of a radio communication apparatus according to a first preferred embodiment of the present invention. The radio communication apparatus according to the first preferred embodiment is characterized by including a transceiver circuit for one CDMA mode and a transceiver circuit for one TDMA mode, in which a frequency band is used that substantially identical to that used in the CDMA mode. Further, in the radio communication apparatus according to the first preferred embodiment, transmitter circuits used in the two modes are constituted by a transmitter circuit of single system. In this case, in the first preferred embodiment, a transmission frequency band of the CDMA mode is substantially identical to that of the TDMA mode:
(1) in the CDMA mode, for example, a transmission frequency band from 824 to 849 MHz is used, and a reception frequency band from 869 to 894 MHz is used; and
(2) in the TDMA mode, for example, a transmission frequency band from 824 to 849 MHz is used, and a reception frequency band from 869 to 894 MHz is used.

Referring to Fig. 1, a switch SW1 is used for switching over between transmission and reception and for selectively switching over between the two modes. In addition, a switch SW2 is used for switching over between the two modes during the transmission. Further, a low-pass filter 12 is provided for low-pass filtering a transmitting radio signal of the TDMA mode, and a band-pass filter 14 is provided for band-pass filtering a received radio signal of the TDMA mode. A duplexer 13 includes two band-pass filters 13a and 13b. The band-pass filters 13a and 13b are provided for selectively band-pass filtering transmitting and received radio signals of the CDMA mode, respectively.

During the reception of the CDMA mode, the switch SW1 is switched over to a contact "b" thereof. In this case, the radio signal of the CDMA mode received by an antenna 11 is inputted to a CDMA mode receiver circuit 20 via the contact "b" of the switch SW1 and the band-pass filter 13b of the duplexer 13. The CDMA mode receiver circuit 20 executes signal processings on an inputted received radio signal, where the signal processings includes a high-frequency low-noise amplification, a frequency conversion into an intermediate frequency signal, a demodulation, and the like. Then the CDMA mode receiver outputs a resultant base band signal, which is a signal to be modulated.

In addition, during the reception of the TDMA mode, the switch SW1 is switched over to a contact "c" thereof. In this case, the radio signal of the TDMA mode received by the antenna 11 is inputted to a TDMA mode receiver circuit 21 via the contact "c" of the switch SW1 and the band-pass filter 14. The TDMA mode receiver circuit 21 executes signal processings on an inputted received radio signal, where the signal processings includes a high-frequency low-noise amplification, a frequency conversion into an intermediate frequency signal, a demodulation, and the like. Then the TDMA mode receiver circuit 21 outputs a resultant base band signal.

Further, during the transmission of the TDMA mode, the switch SW1 is switched over to a contact "a" thereof, and the switch SW2 is switched over to a contact "a" thereof. In this case, a base band signal to be transmitted by radio wave is inputted to an amplitude component detector 15 and a phase component detector 16. The amplitude component detector 15 detects an amplitude component of the base band signal from an inputted base band signal by using a method such as an envelope detection method or the like, and outputs an amplitude component signal indicating a detected amplitude component to a power amplifier 19 including an amplitude modulator function using a modulation method such as the polar modulation. In this case, the amplitude component detector 15 and the power amplifier 19 including the amplitude modulator function constitute an amplitude modulator circuit. In addition, the phase component detector 16 detects a phase component of the base band signal from an inputted base band signal by, for example, limiting an amplitude thereof, and differentiates a phase component signal indicating a detected phase component, and then, outputs a resultant signal to a voltage-controlled oscillator 17. In this case, the phase component detector 16 and the voltage-controlled oscillator 17 constitute a phase modulator circuit. The voltage-controlled oscillator 17 generates a phase-modulated signal by changing an oscillation frequency of a transmitting carrier wave signal according to a voltage level of an inputted phase component signal, and outputs a generated phase-modulated signal to the power amplifier 19 including the amplitude modulator function via a band-pass filter 18, which band-pass-filters an inputted signal to pass therethrough and output only a transmitting signal component. The power amplifier 19 including the amplitude modulator function power-amplifies the phase-modulated signal of the transmitting carrier wave signal from the band-pass filter 18, and modulates an amplitude thereof according to the amplitude component signal from the amplitude component detector 15 to generate a transmitting radio signal. A generated transmitting radio signal is inputted to the antenna 11 via the contact "a" of the switch SW2, the low-pass filter 12 and the contact "a" of the switch SW1, and then, is radiated by the antenna 11.

Still further, during the transmission of the CDMA mode, the switch SW1 is switched over to the contact "b" thereof, and the switch SW2 is switched over to a contact "b" thereof. In this case, the base band signal to be transmitted by radio wave is inputted to the amplitude component detector 15 and the phase component detector 16. On the other hand, a level of an output signal from the amplitude component detector 15 is set to zero so that the amplitude of the base band signal is not modulated. The phase component detector 16 detects a phase component of the base band signal from an inputted base band signal, in a manner similar to that of the TDMA mode, and differentiates a phase component signal indicating a detected phase component to output a resultant signal to the voltage-controlled oscillator 17. The voltage-controlled oscillator 17 generates a phase-modulated signal by changing an oscillation frequency of a transmitting carrier wave signal according to a voltage level of an inputted phase component signal, and then, outputs a generated phase-modulated signal to the power amplifier 19 including the amplitude modulator function via the band-pass filter 18. The power amplifier 19 including the amplitude modulator function does not modulate any amplitude of an inputted transmitting radio signal but power-amplifies the inputted radio signal, and generates a transmitting radio signal. A generated transmitting radio signal is inputted to the antenna 11 via the contact "b" of the switch SW2, the band-pass filter 13a of the duplexer 13 and the contact "b" of the switch SW1, and then, is radiated by the antenna 11.

In the present preferred embodiment, during the transmission of the TDMA mode, the transmitting radio signal is transmitted after being modulated by using a modulation method such as the polar modulation utilizing a combination of an amplitude modulation and a phase modulation. On the other hand, during the transmission of the CDMA mode, the output signal from the amplitude detector 15 is set to zero so that only a phase of the base band signal is modulated, and the transmitting radio signal is transmitted after being modulated by using an orthogonal modulation method such as QPSK modulation. The transmission and reception in the CDMA mode are simultaneously performed in a two-way manner, and namely, a full-duplex communication is executed.

Generally speaking, the TDMA mode radio transmitter circuit according to the prior art is provided without any band-pass filter 18. In this case, a phase-modulated signal from the voltage-controlled oscillator 17 is generated by modulating a phase of a transmitting carrier wave signal, and includes a noise component which is a side band component other than a transmitting radio signal in a corresponding reception frequency band. In order to solve this problem, it is necessary to increase a signal to noise ratio of the voltage-controlled oscillator 17 so as to reduce the noise components, and namely, it is necessary to increase the level of the phase-modulated signal from the voltage-controlled oscillator 17. This results in increase in the current consumption in the radio transmitter circuit. In order to solve this problem, the band-pass filter 18 is also utilized during the transmission of the TDMA mode. Accordingly, the noise component generated for the phase modulation is eliminated so that a desired signal to noise ratio can be obtained. In addition, the current consumption can be reduced as compared with that in the TDMA mode radio transmitter circuit according to the prior art.

Further, the roles of the band-pass filter 18 will be described in detail below. In the CDMA mode, the transmission and reception are simultaneously performed. Accordingly, it is necessary to reduce the noise components, which are included in the output signal from the radio transmitter circuit (that is the input signal of the radio receiver circuit) and which are fallen within the reception frequency band, so that influence of the noise component can be eliminated in the case of minimum reception input. However, increase in the attenuation amount in the reception frequency band of the duplexer 13, which is provided at the subsequent stage of the power amplifier 19, leads to increase in the loss of the signal in the transmission frequency band. As a result, large transmitting radio power which is amplified by the power amplifier 19 is wasted. Accordingly, by setting the attenuation amount in the reception frequency band of the band-pass filter 18, which is provided at the previous stage of an input terminal of the power amplifier 19, to a sufficiently large amount, disregarding of the loss of the transmitting radio signal, the noise component fallen within the reception frequency band can be reduced. Further, since the band-pass filter 18 is provided at the previous stage of the input terminal of the power amplifier 19, the power loss of the transmitting signal decreases even when the power loss is present, resulting in decrease in the power consumption.

In addition, although the transmission and reception are not simultaneously performed in the TDMA mode, there is a possibility that such a noise component that is fallen within the reception frequency band during the transmission becomes an interference wave to a further radio communication apparatus other than the present radio communication apparatus. Accordingly, it is necessary to reduce the noise components fallen within the reception frequency band so that the noise component does not influence any minimum reception input of the further radio communication apparatus, in a manner similar to that of the CDMA mode. In this case, it is capable of reducing the signal to noise ratio of the voltage-controlled oscillator 17 by setting an attenuation amount of the band-pass filter 18 to be a predetermined reception band attenuation amount in the CDMA mode. Then, this leads to reduction in the power consumption.

In the preferred embodiment stated above, the band-pass filter 18 is employed. However, the present invention is not limited to this. As apparent from such technical meanings, that the frequency components, which include the reception frequency band and are other than the transmission frequency band, are attenuated by a predetermined attenuation amount and the signals located in the transmission frequency band is band-pass-filtered to be passed therethrough, for example, a band-stop filter that attenuate the frequency components that include the reception frequency band and are other than the transmission frequency band may be employed. In addition, when the reception frequency bandis higher than the transmission frequency band, a low-pass filter may be employed. Conversely, when the reception frequency band is lower than the transmission frequency band, a high-pass filter may be employed. In other words, a filter that filters a signal component of a transmitting radio signal to pass therethrough the same signal component may be employed instead of the band-pass filter 18.

According to the first preferred embodiment constituted as described so far, even during the transmission of the TDMA mode, it is possible to reduce the noise components included in the transmitting radio signal by using the band-pass filter 18 and to decrease current consumption. In addition, since the radio transmitter circuit used in the TDMA mode and the radio transmitter circuit used in the CDMA mode are constituted by the radio transmitter circuit of the single system, the circuit size thereof can be made remarkably smaller than that of the prior art so that the configuration thereof can be simplified.

### MODIFIED PREFERRED EMBODIMENT OF FIRST PREFERRED EMBODIMENT

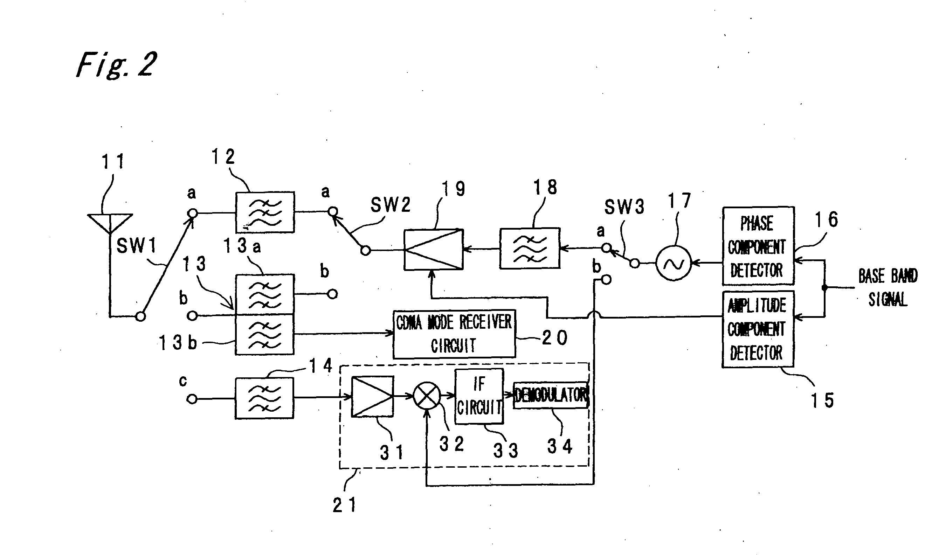

Fig. 2 is a block diagram showing a configuration of a radio communication apparatus according to a modified preferred embodiment of the first preferred embodiment of the present invention. The modified preferred embodiment of the first preferred embodiment is characterized, as compared with the first preferred embodiment, by inserting a switch SW3 between the voltage-controlled oscillator 17 and the band-pass filter 18. In this case, during the reception of the TDMA mode, the switch SW3 is switched over from a contact "a" thereof to a contact "b" thereof, and the voltage-controlled oscillator 17 for phase modulation is set to a non-modulation state, and an oscillation signal (having a relatively high carrier wave to noise ratio) from the voltage-controlled oscillator 17 is used as a local oscillation signal for the TDMA mode receiver circuit 21. Differences between the present preferred embodiment and the first preferred embodiment will be described in detail hereinafter.

Referring to Fig. 2, the TDMA mode receiver circuit 21 is constituted by including a high-frequency low-noise amplifier 31, a mixer 32, an intermediate frequency circuit (referred to as an IF circuit hereinafter) 33, and a demodulator 34. Further, the switch SW3 is switched over to the contact "a" thereof during the transmissions of the TDMA mode and the CDMA mode, and is switched over to the contact "b" thereof during the reception of the TDMA mode.

In the TDMA mode receiver circuit 21, a received radio signal of the TDMA mode outputted from the band-pass filter 14 is low-noise amplified by the high-frequency low-noise amplifier 31, and then, a resultant signal is inputted to the mixer 32. The mixer 32 mixes the inputted received radio signal with the local oscillation signal inputted from the voltage-controlled oscillator 17 via the contact "b" of the switch SW3 so as to frequency-convert the inputted received radio signal into an intermediate frequency signal having a frequency lower than that of the inputted received radio signal. Then IF circuit 33 eliminates the signal components other than the intermediate frequency signal (referred to as an IF signal hereinafter) from the frequency-converted intermediate frequency signal, and amplifies the resultant IF signal to output the same to the demodulator 34. Further, the demodulator 34 demodulates an inputted IF signal into a base band signal using a predetermined demodulation method, and outputs the base band signal.

As described above, the modified preferred embodiment of the first preferred embodiment exhibits not only the functions and advantageous effects according to the first preferred embodiment, but also such a unique advantageous effect, that the number of oscillators provided in a radio receiver circuit can be reduced by one and the configuration of the radio communication apparatus can be simplified by using the oscillation signal from the voltage-controlled oscillator 17 as the local oscillation signal for the TDMA mode receiver circuit 21.

### SECOND PREFERRED EMBODIMENT

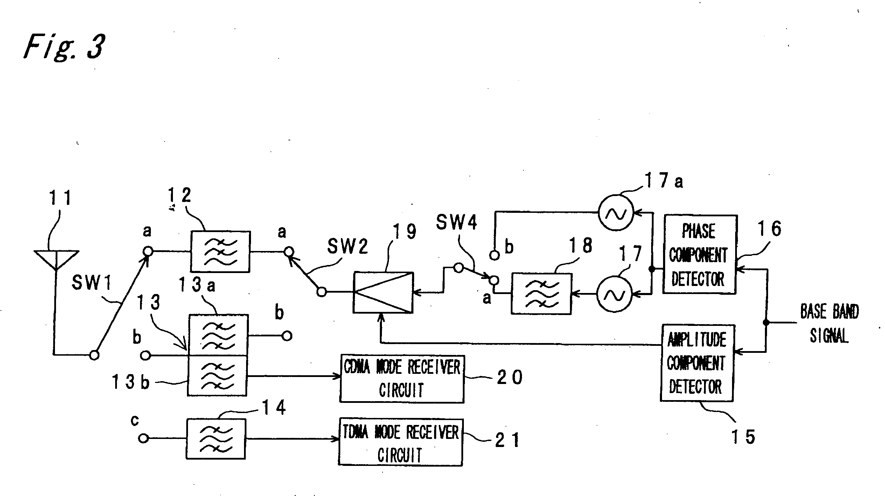

Fig. 3 is a block diagram showing a configuration of a radio communication apparatus according to a second preferred embodiment of the present invention. The radio communication apparatus according to the second preferred embodiment is characterized by including the following:
(a) a transceiver circuit for one CDMA mode;
(b) a transceiver circuit for one TDMA mode (referred to as a first TDMA mode hereinafter), and another TDMA mode (referred to as a second TDMA mode hereinafter), where the first TDMA mode utilizes a first frequency band that is substantially identical to a frequency band used in the CDMA mode, and the second TDMA mode utilizes a second frequency band that is different from the first frequency band.

In addition, the radio communication apparatus according to the second preferred embodiment is characterized, as compared with the first preferred embodiment, by further including a switch SW4 for selectively switching over between the two TDMA modes (during the transmission), and a voltage-controlled oscillator 17a for a transmitter circuit of the second TDMA mode.

In this case, in the second preferred embodiment, the following transmission and reception frequency bands are used:
(1) in the CDMA mode, for example, a transmission frequency band from 824 to 849 MHz is used, and a reception frequency band from 869 to 894 MHz is used;
(2) in the first TDMA mode, for example, a transmission frequency band from 824 to 849 MHz is used, and a reception frequency band 869 to 894 MHz is used; and
(3) in the second TDMA mode, for example, a transmission frequency band from 1710 to 1785 MHz is used, and a reception frequency band from 1805 to 1880 MHz is used.

Differences between the present preferred embodiment and the first preferred embodiment will be described in detail hereinafter.

Referring to Fig. 3, during the transmission of the first TDMA mode and during the transmission of the CDMA mode, the switch SW4 is switched over to a contact "a" thereof. In this case, in a manner similar to that of the first preferred embodiment, the voltage-controlled oscillator 17 generates a phase-modulated signal by changing an oscillation frequency of a transmitting carrier wave signal according to a voltage level of an inputted phase component signal, and outputs a generated phase-modulated signal to the power amplifier 19 including the amplitude modulator function via the band-pass filter 18, which band-pass-filters an inputted signal to pass therethrough only a transmitting signal component, and the contact "a" of the switch SW4. On the other hand, during the transmission of the second TDMA mode, the switch SW4 is switched over to a contact "b" thereof. In this case, the voltage-controlled oscillator 17a generates a phase-modulated signal by changing an oscillation frequency of a transmitting carrier wave signal according to a voltage level of an inputted phase component signal, and outputs a generated phase-modulated signal to the power amplifier 19 including the amplitude modulator function via the contact "b" of the switch SW4.

According to the second preferred embodiment constituted as described so far, in a manner similar to that of the first preferred embodiment, it is possible to miniaturize the radio transmitter circuit used in the CDMA mode having the transmission frequency band that is the same as that of the first TDMA mode. In addition, during the transmission of the second TDMA mode, the above-described current consumption increases since the band-pass filter 18 is not inserted, however, the radio transmitter circuit can be shared without any additional band-pass filter 18. This leads to miniaturization in the configuration of the whole radio transmitter circuit.

### MODIFIED PREFERRED EMBODIMENT OF SECOND PREFERRED EMBODIMENT

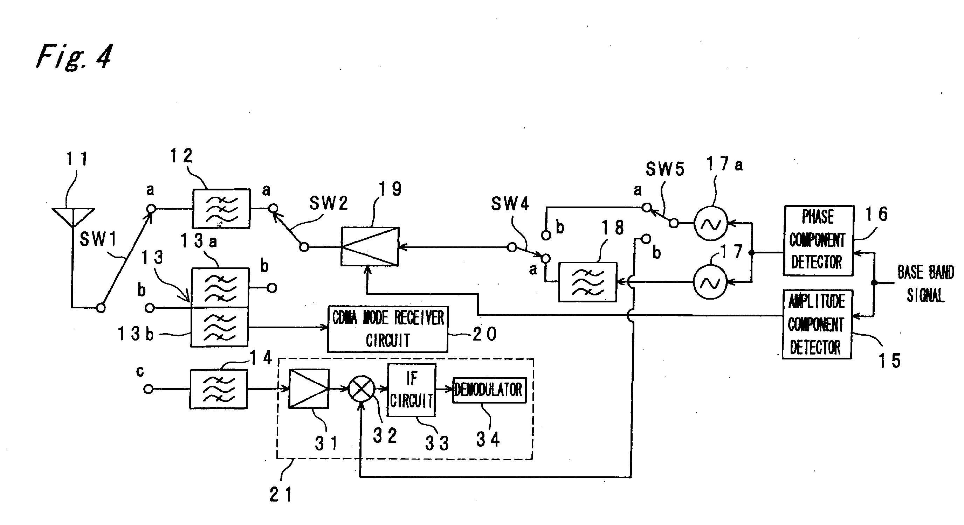

Fig. 4 is a block diagram showing a configuration of a radio communication apparatus according to a modified preferred embodiment of the second preferred embodiment of the present invention. The modified preferred embodiment of the second preferred embodiment is characterized, as compared with the second preferred embodiment, by inserting a switch SW5 between the voltage-controlled oscillator 17a and the contact "b" of the switch SW4. In this case, during the reception of the second TDMA mode, the switch SW5 is switched over from a contact "a" thereof to a contact "b" thereof, the voltage-controlled oscillator 17a for executing phase modulation is set to the non-modulation state, and an oscillation signal (having a relatively high carrier wave to noise ratio) from the voltage-controlled oscillator 17a is used as a local oscillation signal for the TDMA mode receiver circuit 21. Differences between the present preferred embodiment and the second preferred embodiment will be described in detail hereinafter.

Referring to Fig. 4, the switch SW5 is switched over to the contact "a" thereof during the transmission of the second TDMA mode, and is switched over to the contact "b" thereof during the reception of the second TDMA mode. In the former case, during the transmission of the second TDMA mode, the phase-modulated signal from the voltage-controlled oscillator 17a is outputted to the power amplifier 19 including the amplitude modulator function via the contact "a" of the switch SW5 and the contact "b" of the switch SW4. In the latter case, during the reception of the second TDMA mode, the phase-modulated signal from the voltage-controlled oscillator 17a is outputted to the TDMA mode receiver circuit 21 via the contact "b" of the switch SW5 as the local oscillation signal.

As described above, the modified preferred embodiment of the second preferred embodiment exhibits not only the functions and advantageous effects according to the second preferred embodiment, but also such a unique advantageous effect that the number of oscillators provided in the radio receiver circuit can be reduced by one, and the configuration of the radio communication apparatus can be simplified by using the oscillation signal from the voltage-controlled oscillator 17a as the local oscillation signal for the TDMA mode receiver circuit 21.

### ANOTHER MODIFIED PREFERRED EMBODIMENT OF SECOND

### PREFERRED EMBODIMENT

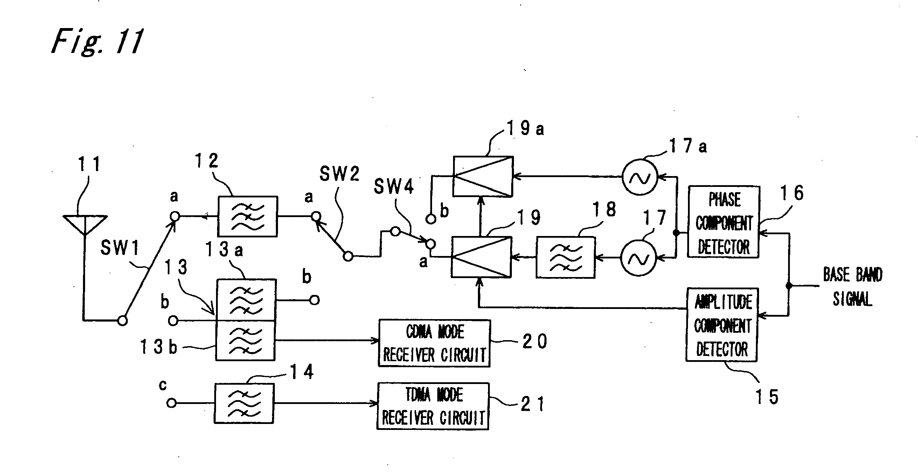

Fig. 11 is a block diagram showing a configuration of a radio communication apparatus according to another modified preferred embodiment of the second preferred embodiment of the present invention. Another modified preferred embodiment of the second preferred embodiment is characterized, as compared with the second preferred embodiment shown in Fig. 3, in that an insertion location of a switch SW4a is shifted to a subsequent stage of power amplifiers 19 and 19a including functions for amplitude modulation, where the power amplifiers 19 and 19a execute the same signal processing.

Referring to Fig. 11, the phase-modulated signal from the voltage-controlled oscillator 17 is inputted to a contact "a" of the switch SW4, via the band-pass filter 18 and the power amplifier 19 including the amplitude modulator function. In addition, the phase-modulated signal from the voltage-controlled oscillator 17a is inputted to a contact "b" of the switch SW4, via the power amplifier 19a including the amplitude modulator function. The unique configuration of the another modified preferred embodiment of the second preferred embodiment can be applied to not only the modified preferred embodiment of the second preferred embodiment described earlier, but also the other preferred embodiments described later and modified preferred embodiments thereof.

### THIRD PREFERRED EMBODIMENT

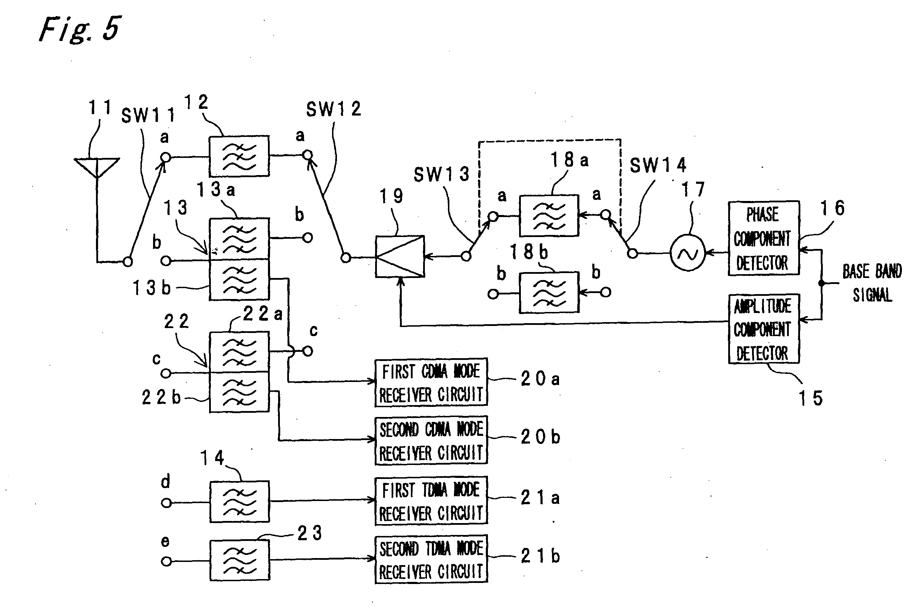

Fig. 5 is a block diagram showing a configuration of a radio communication apparatus according to a third preferred embodiment of the present invention. The radio communication apparatus according to the third preferred embodiment includes transceiver circuits for two CDMA modes (referred to as first and second CDMA modes hereinafter), and transceiver circuits for two TDMA modes (referred to as first and second TDMA modes hereinafter). In the first and second TDMA modes, the same frequency bands as those of the first and second CDMA modes are used, respectively. In this case, in the third preferred embodiment, the following frequency bands are used:
(1) in the first TDMA mode and the first CDMA mode, for example, a transmission frequency band from 1710 to 1785 MHz is used, and a reception frequency band from 1805 to 1880 MHz is used; and
(2) in the second TDMA mode and the second CDMA mode, for example, a transmission frequency band from 1850 to 1910 MHz, and a reception frequency band from 1930 to 1990 MHz is used.

In other words, in the third preferred embodiment, the transmission and reception frequencies of the first TDMA mode are slightly shifted from those of the second TDMA mode by a predetermined first frequency shift amount, and the transmission and reception frequencies of the first CDMA mode are slightly shifted from those of the second CDMA mode by a predetermined second frequency shift amount.

Comparing Fig. 5 with Fig. 1, the configuration according to the third preferred embodiment is different from that according to the first preferred embodiment in the following points:
(1) a switch SW11 is provided instead of the switch SW1;
(2) a switch SW12 is provided instead of the switch SW2;
(3) a duplexer 22 used in the second CDMA mode is further provided, where the duplexer 22 includes a band-pass filter 22a for band-pass filtering a transmitting radio signal of the second CDMA mode, and a band-pass filter 22b for band-pass filtering a received radio signal of the second CDMA mode;
(4) a band-pass filter 23 for band-pass filtering a received radio signal of the second TDMA mode is further provided;
(5) a first CDMA mode receiver circuit 20a and a second CDMA mode receiver circuit 20b are provided instead of the CDMA mode receiver circuit 20;
(6) a first TDMA mode receiver circuit 21a and a second TDMA mode receiver circuit 21b are provided instead of the TDMA mode receiver circuit 21;
(7) band-pass filters 18a and 18b are provided instead of the band-pass filter 18, where the band-pass filter 18a band-pass filters transmitting radio signals of the first CDMA mode and the first TDMA mode, and the band-pass filter 18b band-pass filters transmitting radio signals of the second CDMA mode and the second TDMA mode; and
(8) two switches SW13 and SW14 are provided for selectively switching over between the two band-pass filters 18a and 18b to be interlocked with each other.

Referring to Fig. 5, during the transmission of the first TDMA mode, all the switches SW11, SW12, SW 13 and SW 14 are switched over to contacts "a" thereof. In this case, the transmitting radio signal, which is the phase-modulated signal from the voltage-controlled oscillator 17, is inputted to the power amplifier 19 including the amplitude modulator function via the contact "a" of the switch SW 14, the band-pass filter 18a, and the contact "a" of the switch SW13. The power amplifier 19 including the amplitude modulator function amplifies the power of the inputted signal, and modulates the amplitude of the inputted signal to generates, for example, a polar-modulated transmitting radio signal. Next, the generated transmitting radio signal is outputted to the antenna 11 via the contact "a" of the switch SW12, the low-pass filter 12 and the contact "a" of the switch SW11, and then, is radiated by the antenna 11. On the other hand, during the reception of the first TDMA mode, the switch SW11 is switched over to a contact "d" thereof, and a radio signal received by the antenna 11 is inputted to the first TDMA mode receiver circuit 21a via the contact "d" of the switch SW11 and the band-pass filter 14. Next, the first TDMA mode receiver circuit 21a executes signal processings on the inputted received radio signal, including high-frequency low-noise amplification, frequency conversion into an IF signal, demodulation and the like, to output a demodulated base band signal.

In addition, during the transmission of the second TDMA mode, both of the switches SW11 and SW12 are switched over to the contacts "a" thereof, and both of the switches SW13 and SW14 are switched over to contacts "b" thereof. In this case, the transmitting radio signal, which is the phase-modulated signal from the voltage-controlled oscillator 17, is inputted to the power amplifier 19 including the amplitude modulator function via the contact "b" of the switch SW14, the band-pass filter 18b and the contact "b" of the switch SW13. The power amplifier 19 including the amplitude modulator function amplifies the power of the inputted signal, and modulates the amplitude of the inputted signal to generate, for example, a polar-modulated transmitting radio signal. Next, the generated transmitting radio signal is outputted to the antenna 11 via the contact "a" of the switch SW12, the low-pass filter 12 and the contact "a" of the switch SW11, and then, is radiated by the antenna 11. On the other hand, during the reception of the second TDMA mode, the switch SW11 is switched over to a contact "e" thereof, and a radio signal received by the antenna 11 is inputted to the second TDMA mode receiver circuit 21b via the contact "e" of the switch SW11 and the band-pass filter 23. Next, the second TDMA mode receiver circuit 21b executes signal processings on an inputted received radio signal, including high-frequency low-noise amplification, frequency conversion into an IF signal, demodulation and the like, to output the demodulated base band signal.

Further, during the transmission and reception of the first CDMA mode, both of the switches SW11 and SW12 are switched over to contacts "b" thereof, and both of the switches SW 13 and SW 14 are switched over to the contacts "a" thereof. In this case, the transmitting radio signal, which is the phase-modulated signal from the voltage-controlled oscillator 17, is inputted to the power amplifier 19 including the amplitude modulator function via the contact "a" of the switch SW14, the band-pass filter 18a and the contact "a" of the switch SW13. The power amplifier 19 including the amplitude modulator function only amplifies the power of the inputted signal to generate, for example, an orthogonal-modulated transmitting radio signal such as a QPSK-modulated transmitting radio signal. Next, the generated transmitting radio signal is outputted to the antenna 11 via the contact "b" of the switch SW12, the band-pass filter 13a of the duplexer 13 and the contact "b" of the switch SW11, and then, is radiated by the antenna 11. On the other hand, a radio signal received by the antenna 11 is inputted to the first CDMA mode receiver circuit 20a via the contact "b" of the switch SW11 and the band-pass filter 13b of the duplexer 13. Next, the first CDMA mode receiver circuit 20a executes signal processings on an inputted received radio signal, including high-frequency low-noise amplification, frequency conversion into an IF signal, demodulation and the like, to output the demodulated base band signal.

Still further, during the transmission and reception of the second CDMA mode, both of the switches SW11 and SW12 are switched over to contacts "c" thereof, both of the switches SW13 and SW14 are switched over to the contacts "b" thereof. In this case, the transmitting radio signal, which is the phase-modulated signal from the voltage-controlled oscillator 17, is inputted to the power amplifier 19 including the amplitude modulator function via the contact "b" of the switch SW14, the band-pass filter 18b and the contact "b" of the switch SW13. The power amplifier 19 including the amplitude modulator function only amplifies the power of the inputted signal to generate, for example, an orthogonal-modulated transmitting radio signal such as a QPSK-modulated transmitting radio signal. Next, the generated transmitting radio signal is outputted to the antenna 11 via the contact "c" of the switch SW12, the band-pass filter 22a of the duplexer 22 and the contact "c" of the switch SW11, and then, is radiated by the antenna 11. On the other hand, a radio signal received by the antenna 11 is inputted to the second CDMA mode receiver circuit 20b via the contact "c" of the switch SW11 and the band-pass filter 22b of the duplexer 22. Next, the second CDMA mode receiver circuit 20b executes signal processings on an inputted received radio signal, including high-frequency low-noise amplification, frequency conversion into an IF signal, demodulation and the like, to output a demodulated base band signal.

In the present preferred embodiment described above, the band-pass characteristic on the transmitting radio signal of the first TDMA mode is determined by those of the band-pass filter 18a and the low-pass filter 12. In addition, the band-pass characteristic on the transmitting radio signal of the second TDMA mode is determined by those of the band-pass filter 18b and the low-pass filter 12. Further, the band-pass characteristic on the transmitting radio signal of the first CDMA mode is determined by those of the band-pass filter 18a and the band-pass filter 13a. Still further, the band-pass characteristic on the transmitting radio signal of the second CDMA mode is determined by those of the band-pass filter 18b and the band-pass filter 22a.

According to the third preferred embodiment constituted as described so far, there can be provided the radio communication apparatus capable of implementing a plurality of combinations between TDMA and CDMA modes, where the operation of the TDMA mode and the operation of the CDMA mode can be performed within the same frequency band. In addition, in a manner similar to that of the first preferred embodiment, it is possible to reduce the noise components included in the transmitting radio signal to decrease the power consumption by utilizingthe band-pass filters 18a and 18b even during the transmission of the TDMA mode. Further, in a manner similar to that of the first preferred embodiment, it is possible to miniaturize the radio transmitter circuit of a CDMA mode corresponding to and having the same transmission frequency band of a certain TDMA mode.

### MODIFIED PEFERRED EMBODIMENT OF THIRD PREFERRED EMBODIMENT

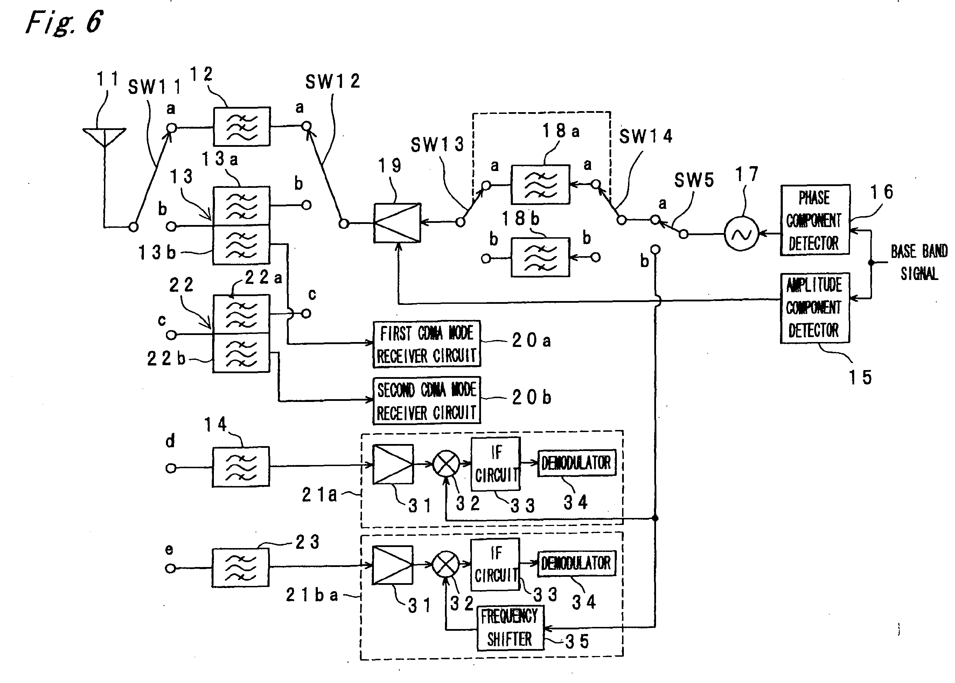

Fig. 6 is a block diagram showing a configuration of a radio communication apparatus according to a modified preferred embodiment of the third preferred embodiment of the present invention. The modified preferred embodiment of the third preferred embodiment is characterized, as compared with the third preferred embodiment, by inserting the switch SW5 between the voltage-controlled oscillator 17 and a common terminal of the switch SW14, and including a second TDMA mode receiver circuit 21ba further including a frequency shifter 35 instead of the second TDMA mode receiver circuit 21b. In this case, during the receptions of the first and second TDMA modes, the switch SW5 is switched over from the contact "a" thereof to the contact "b", thereof, the voltage-controlled oscillator 17 for executing the phase modulation is set to the non-modulation state, and an oscillation signal (having a relatively high carrier wave to noise ratio) from the voltage-controlled oscillator 17 is used as local oscillation signals for the first and second TDMA mode receiver circuits 21a and 21ba. Differences between the present preferred embodiment and the third preferred embodiment will be described in detail hereinafter.

Referring to Fig. 6, in a manner similar to that of the respectivemodified preferred embodiments of the first and second preferred embodiments, the first TDMA mode receiver circuit 21a is constituted by including the high-frequency low-noise amplifier 31, the mixer 32, the IF circuit 33, and the demodulator 34. The second TDMA mode receiver circuit 21ba is constituted by including the high-frequency low-noise amplifier 31, the mixer 32, the IF circuit 33, the demodulator 34, and the frequency shifter 35.

The switch SW5 is switched over to the contact "a" thereof during the transmissions in the first and second TDMA modes, and is switched over to the contact "b" thereof during the receptions of the first and second TDMA modes. In the former case, during the transmissions of the first and second TDMA modes, the phase-modulated signal from the voltage-controlled oscillator 17 is outputted to the common terminal of the switch SW14 via the contact "a" of the switch SW5. In the latter case, during the reception of the first TDMA mode, the phase-modulated signal from the voltage-controlled oscillator 17 is outputted as a local oscillation signal to the mixer 32 of the first TDMA mode receiver circuit 21a via the contact "b" of the switch SW5. Further, in the latter case, during the reception of the second TDMA mode, the phase-modulated signal from the voltage-controlled oscillator 17 is outputted as a local oscillation signal to the mixer 32 of the second TDMA mode receiver circuit 21ba, via the contact "b" of the switch SW5, and the frequency shifter 35 for shifting a frequency of an inputted local oscillation signal by a frequency amount of a difference between the frequency of the received radio signal of the first TDMA mode and the frequency of the received radio signal of the second TDMA mode.

As described above, the modified preferred embodiment of the third preferred embodiment exhibits not only the functions and advantageous effects according to the third preferred embodiment but also such unique advantageous effect, that the number of oscillators provided in the radio receiver circuit can be reduced by two, and the configuration of the radio communication apparatus can be simplified by using the oscillation signal from the voltage-controlled oscillator 17 as the local oscillation signals for the first and second TDMA mode receiver circuits 21a and 21ba.

### FOURTH PREFERRED EMBODIMENT

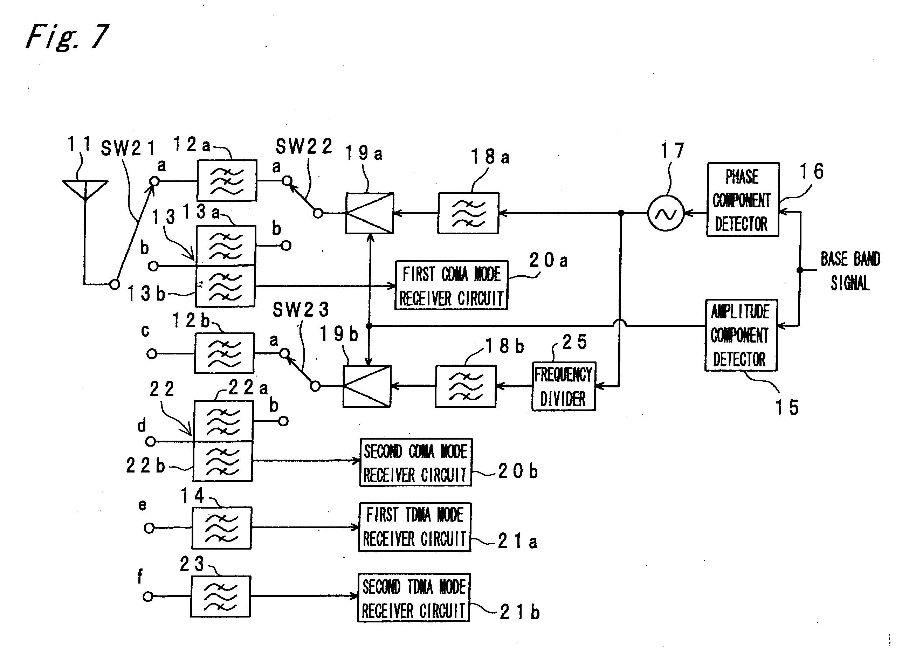

Fig. 7 is a block diagram showing a configuration of a radio communication apparatus according to a fourth preferred embodiment of the present invention. The radio communication apparatus according to the fourth preferred embodiment includes, in a manner similar to that of the third preferred embodiment, there are used transceiver circuits for two CDMA modes (referred to as first and second CDMA modes, respectively, hereinafter), and transceiver circuits for two TDMA modes (referred to as first and second TDMA modes, respectively, hereinafter), where the frequency bands of the first and second CDMA modes are substantially identical to the frequency bands of the first and second TDMA modes, respectively. In this case, in the fourth preferred embodiment, the following transmission and reception bands are used:
(1) in the first TDMA mode and the first CDMA mode, for example, a transmission frequency from 1710 to 1785 MHz is used, and a reception frequency band from 1805 to 1880 MHz is used; and
(2) in the second TDMA mode and the second CDMA mode, for example, a transmission frequency band from 890 to 915 MHz is used, and a reception frequency band from 935 to 960 MHz is used.

In other words, in the fourth preferred embodiment, the transmission and reception frequencies of the second TDMA mode are approximately or substantially half the transmission and reception frequencies of the first TDMA mode, respectively, and also, the transmission and reception frequencies of the second CDMA mode are approximately or substantially half the transmission and reception frequencies of the first CDMA mode, respectively.

Comparing Fig. 7 with Fig. 5, the configuration according to the fourth preferred embodiment is different from that according to the third preferred embodiment in the following points:
(1) a switch SW21 is provided instead of the switch SW11;
(2) two switches SW22 and SW23 are provided instead of the switch SW12;
(3) a low-pass filter 12a for transmitting a radio signal of the first TDMA mode and a low-pass filter 12b for transmitting a radio signal of the second TDMA mode are provided instead of the low-pass filter 12 for transmitting radio signals of the TDMA modes;
(4) a power amplifier 19a including an amplitude modulator function for transmitting a radio signal of the first TDMA mode, and a power amplifier 19b including an amplitude modulator function for transmitting a radio signal of the second TDMA mode are provided instead of the power amplifier 19 including the amplitude modulator function for the transmitting radio signals of the TDMA modes; and
(5) a frequency divider 25 for dividing a frequency of an inputted oscillation signal by two to output a frequency-divided local oscillation signal is inserted between the voltage-controlled oscillator 17 and the band-pass filter 18b.

Referring to Fig. 7, during the transmission of the first TDMA mode, both of the switches SW21 and SW22 are switched over to contacts "a" thereof. In this case, the transmitting radio signal, which is the phase-modulated signal from the voltage-controlled oscillator 17, is inputted to the power amplifier 19a including the amplitude modulator function via the band-pass filter 18a. The power amplifier 19a including the amplitude modulator function amplifies the power of the inputted signal and modulates the amplitude of the inputted signal to generate, for example, a polar-modulated transmitting radio signal. Next, the generated transmitting radio signal is outputted to the antenna 11 via the contact "a" of the switch SW22, the low-pass filter 12a and the contact "a" of the switch SW21, and then, is radiated by the antenna 11. On the other hand, during the reception of the first TDMA mode, the switch SW21 is switched over to a contact "e" thereof, and a radio signal received by the antenna 11 is inputted to the first TDMA mode receiver circuit 21a via the contact "e" of the switch SW21 and the band-pass filter 14. Next, the first TDMA mode receiver circuit 21a executes signal processings on an inputted received radio signal, including high-frequency low-noise amplification, frequency conversion into an IF signal, demodulation and the like, to output a demodulated base band signal.

In addition, during the transmission of the second TDMA mode, the switch SW21 is switched over to a contact "c" thereof, and the switch SW23 is switched over to a contact "a" thereof. In this case, a frequency of the transmitting radio signal, which is the phase-modulated signal from the voltage-controlled oscillator 17, is divided by two by the frequency divider 25, and a divided transmitting radio signal is inputted to the power amplifier 19b including the amplitude modulator function via the band-pass filter 18b. The power amplifier 19b including the amplitude modulator function amplifies the power of the inputted signal, and modulates the amplitude of the inputted signal to generate, for example, a polar-modulated transmitting radio signal. Next, the generated transmitting radio signal is outputted to the antenna 11 via the contact "a" of the switch SW23, the low-pass filter 12b and the contact "c" of the switch SW21, and then, is radiated by the antenna 11. On the other hand, during the reception of the second TDMA mode, the switch SW21 is switched over to a contact "f" thereof, and a radio signal received by the antenna 11 is inputted to the second TDMA mode receiver circuit 21b via the contact "f" of the switch SW21 and the band-pass filter 23. Next, the second TDMA mode receiver circuit 21 b executes signal processings on the inputted received radio signal, including high-frequency low-noise amplification, frequency conversion into an IF signal, demodulation and the like, to output a demodulated base band signal.

Further, during the transmission and reception of the first CDMA mode, both of the switches SW21 and SW22 are switched over to contacts "b" thereof. In this case, the transmitting radio signal, which is the phase-modulated signal from the voltage-controlled oscillator 17, is inputted to the power amplifier 19a including the amplitude modulator function via the band-pass filter 18a. The power amplifier 19a including the amplitude modulator function only amplifies the power of the inputted signal to generate, for example, an orthogonal-modulated transmitting radio signal such as a QPSK-modulated transmitting radio signal. Next, the generated transmitting radio signal is outputted to the antenna 11 via the contact "b" of the switch SW22, the band-pass filter 13a of the duplexer 13 and the contact "b" of the switch SW21, and then, is radiated by the antenna 11. On the other hand, a radio signal received by the antenna 11 is inputted to the first CDMA mode receiver circuit 20a via the contact "b" of the switch SW21 and the band-pass filter 13b of the duplexer 13. Next, the first CDMA mode receiver circuit 20a executes signal processings on the inputted received radio signal, including high-frequency low-noise amplification, frequency conversion into an IF signal, demodulation and the like, to output a demodulated base band signal.

Still further, during the transmission and reception of the second CDMA mode, the switch SW21 is switched over to a contact "d" thereof and the switch SW23 is switched over to a contact "b" thereof. In this case, the frequency of the transmitting radio signal, which is the phase-modulated signal from the voltage-controlled oscillator 17, is divided by two by the frequency divider 25, and a divided transmitting radio signal is inputted to the power amplifier 19b including the amplitude modulator function via the band-pass filter 18b. The power amplifier 19b including the amplitude modulator function only amplifies the power of the inputted signal to generate, for example, an orthogonal-modulated transmitting radio signal such as a QPSK-modulated transmitting radio signal. Next, the generated transmitting radio signal is outputted to the antenna 11 via the contact-"b" of the switch SW23, the band-pass filter 22a of the duplexer 22 and the contact "d" of the switch SW21, and then, is radiated by the antenna 11. On the other hand, a radio signal received by the antenna 11 is inputted to the second CDMA mode receiver circuit 20b via the contact "d" of the switch SW21 and the band-pass filter 22b of the duplexer 22. Next, the second CDMA mode receiver circuit 20b executes signal processings on the inputted received radio signal, including high-frequency low-noise amplification, frequency conversion into an IF signal, demodulation and the like, to output a demodulated base band signal.

In the present preferred embodiment described above, the band-pass characteristic on the transmitting radio signal of the first TDMA mode is determined by those of the band-pass filter 18a and the low-pass filter 12a. In addition, the band-pass characteristic on the transmitting radio signal of the second TDMA mode is determined by those of the band-pass filter 18b and the low-pass filter 12b. Further, the band-pass characteristic on the transmitting radio signal of the first CDMA mode is determined by those, of the band-pass filter 18a and the band-pass filter 13a. Still further, the band-pass characteristic on the transmitting radio signal of the second CDMA mode is determined by those of the band-pass filter 18b and the band-pass filter 22a.

According to the fourth preferred embodiment constituted as described so far, there can be provided the radio communication apparatus capable of implementing a combination of the TDMA modes and the CDMA modes, where the TDMA modes and the CDMA modes operate in the same frequency bands, a ratio of a frequency of one TDMA mode to that of another TDMA mode is two, and a ratio of a frequency of one CDMA mode to that of another CDMA mode is two. In addition, in a manner similar to that of the first preferred embodiment, it is possible to reduce the noise components included in the transmitting radio signal to decrease the power consumption by utilizing the band-pass filters 18a and 18b even during the transmission of the TDMA mode. Further, in a manner similar to that of the first preferred embodiment, it is possible to miniaturize the radio transmitter circuit of the CDMA mode corresponding to and having the same transmission frequency as a transmission frequency of the certain TDMA mode.

### MODIFIED PREFERRED EMBODIMENT OF FOURTH PREFERRED EMBODIMENT

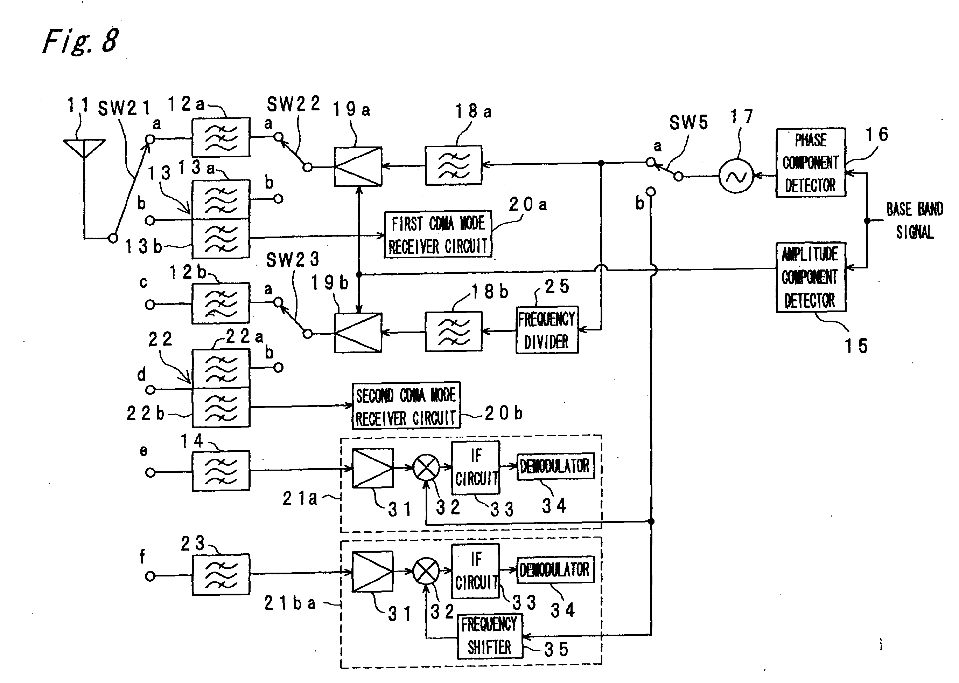

Fig. 8 is a block diagram showing a configuration of a radio communication apparatus according to a modified preferred embodiment of the fourth preferred embodiment of the present invention. The modified preferred embodiment of the fourth preferred embodiment is characterized, as compared with the fourth preferred embodiment, by inserting the switch SW5 between the voltage-controlled oscillator 17, and a connecting point of the band-pass filter 18a and the frequency divider 25, and by including a second TDMA mode receiver circuit 21ba further including a frequency shifter 35 instead of the second TDMA mode receiver circuit 21b.

In this case, during the receptions of the first and second TDMA modes, the switch SW5 is switched over from the contact "a" thereof to the contact "b" thereof, the voltage-controlled oscillator 17 for executing the phase modulation is set to the non-modulation state, and an oscillation signal (having a relatively high carrier wave to noise ratio) from the voltage-controlled oscillator 17 is used as local oscillation signals for the first and second TDMA mode receiver circuits 21a and 21ba. Differences between the present preferred embodiment and the fourth preferred embodiment will be described in detail hereinafter.

Referring to Fig. 8, in a manner similar to that of the respective modified preferred embodiments of the first, second and third preferred embodiments, the first TDMA mode receiver circuit 21a is constituted by including the high-frequency low-noise amplifier 31, the mixer 32, the IF circuit 33, and the demodulator 34. In addition, the second TDMA mode receiver circuit 21ba is constituted by including the high-frequency low-noise amplifier 31, the mixer 32, the IF circuit 33, the demodulator 34, and the frequency shifter 35.

During the transmissions of the first and second TDMA modes, the switch SW5 is switched over to the contact "a" thereof. On the other hand, during the receptions of the first and second TDMA modes, the switch SW5 is switched over to the contact "b" thereof. In the former case, during the transmissions of the first and second TDMA modes, the phase-modulated signal from the voltage-controlled oscillator 17 is outputted to the band-pass filter 18a and the frequency divider 25 via the contact "a" of the switch SW5. In the latter case, during the reception of the first TDMA mode, the phase-modulated signal from the voltage-controlled oscillator 17 is outputted as a local oscillation signal to the mixer 32 of the first TDMA mode receiver circuit 21 a via the contact "b" of the switch SW5. Further, in the latter case, during the reception of the second TDMA mode, the phase-modulated signal from the voltage-controlled oscillator 17 is outputted as a local oscillation signal to the mixer 32 of the second TDMA mode receiver circuit 21ba via the contact "b" of the switch SW5 and the frequency shifter 35 for shifting the frequency of the inputted local oscillation signal by a frequency amount of a difference between the frequency of the received radio signal of the first TDMA mode and the frequency of the received radio signal of the second TDMA mode..

As described so far, the modified preferred embodiment of the fourth preferred embodiment exhibits not only the functions and advantageous effects according to the fourth preferred embodiment, but also such a unique advantageous effect, that the number of oscillators provided in the radio receiver circuit can be reduced by two, and the configuration of the radio communication apparatus can be simplified by using the oscillation signal from the voltage-controlled oscillator 17 as the local oscillation signals for the first and second TDMA mode receiver circuits 21a and 21ba.

### FIFTH PREFERRED EMBODIMENT

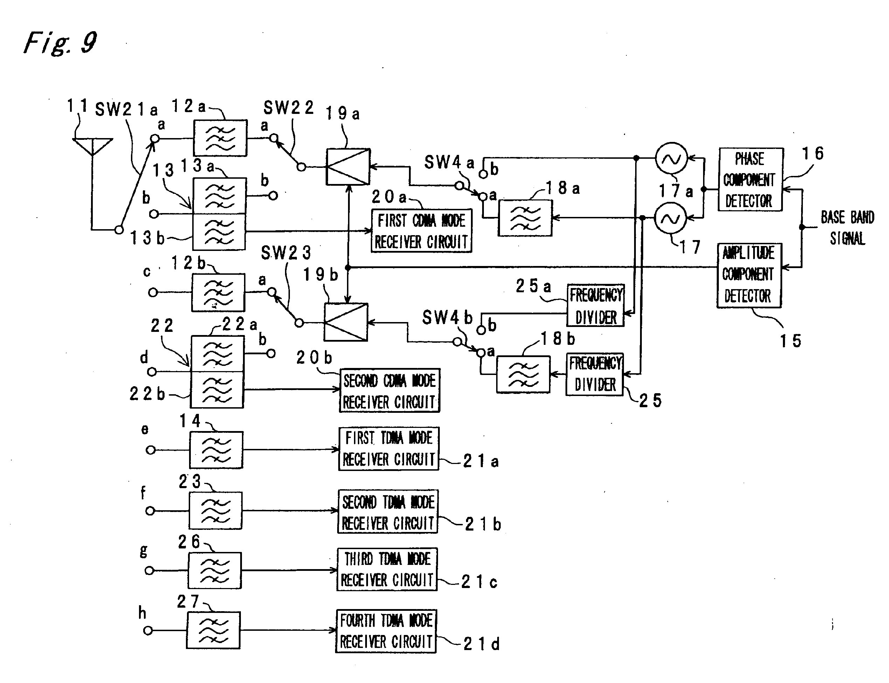

Fig. 9 is a block diagram showing a configuration of a radio communication apparatus according to a fifth preferred embodiment of the present invention. The radio communication apparatus according to the fifth preferred embodiment is characterized by including the configuration of the features of the second preferred embodiment, in addition to the radio communication apparatus according to the fourth preferred embodiment of the present invention. The radio communication apparatus according to the fifth preferred embodiment includes transceiver circuits for two CDMA modes (referred to as first and second CDMA modes, hereinafter) and transceiver circuits for two TDMA modes (referred to as first and second TDMA modes, hereinafter), where the frequency bands of the first and second TDMA modes that are substantially identical to the frequency bands of the first and second CDMA modes, respectively. Further, the radio communication apparatus according to the fifth preferred embodiment further includes the following:
(a) a transceiver circuit for a third TDMA mode used in a frequency band that is slightly shifted from the frequency band of the first TDMA mode; and
(b) a transceiver circuit for a fourth TDMA mode used in a frequency band that is slightly shifted from the frequency band of the second TDMA mode.

In this case, in the fifth preferred embodiment, the following transmission and reception bands are used:
(1) in the first TDMA mode and the first CDMA mode, for example, a transmission frequency band from 1710 to 1785 MHz is used, and a reception frequency band from 1805 to 1880 MHz is used;
(2) in the second TDMA mode and the second CDMA mode, for example, a transmission frequency band from 824 to 849 MHz is used, and a reception frequency band from 869 to 894 MHz is used;
(3) in the third TDMA mode, for example, a transmission frequency band from 1850 to 1910 MHz is used, and a reception frequency band from 1930 to 1990 MHz is used; and
(4) in the fourth TDMA mode, for example, a transmission frequency band from 890 to 915 MHz is used, and a reception frequency band from 935 to 960 MHz is used.

In this case, in the fifth preferred embodiment, the transmission and reception frequencies of the first TDMA mode are approximately or substantially half the transmission and reception frequencies of the second TDMA mode, respectively, the transmission and reception frequencies of the first CDMA mode are also approximately or substantially half the transmission and reception frequencies of the second CDMA mode, respectively, and the transmission and reception frequencies of the fourth TDMA mode are approximately or substantially half the transmission and reception frequencies of the third TDMA mode, respectively.

Comparing Fig. 9 with Fig. 7, the configuration according to the fifth preferred embodiment is different from that according to the fourth preferred embodiment in the following points:
(1) a switch SW21a further including two contacts "g" and "h" is provided instead of the switch SW21;
(2) a voltage-controlled oscillator 17a used in the third TDMA mode is provided in addition to the voltage-controlled oscillator 17 used in the first TDMA mode and the first CDMA mode;
(3) a frequency divider 25a for dividing the frequency of the inputted phase-modulated signal by two in the fourth TDMA mode is provided in addition to the frequency divider 25 used in the second TDMA mode and the second CDMA mode;
(4) a switch SW4a is provided for selecting one of a phase-modulated signal outputted from the voltage-controlled oscillator 17a and a phase-modulated signal outputted from the voltage-controlled oscillator 17 via the band-pass filter 18a to output the selected signal;
(5) a switch SW4b is provided for selecting one of a phase-modulated signal outputted from the voltage-controlled oscillator 17 via the frequency divider 25 and the band-pass filter 18b and a phase-modulated signal inputted from the voltage-controlled oscillator 17a via the frequency divider 25a to output the selected signal; and
(6) a third TDMA mode receiver circuit 21c used in the third TDMA mode and a fourth TDMA mode receiver circuit 21d used in the fourth TDMA mode are further provided.

Referring to Fig. 9, during the transmission of the first TDMA mode, both the switches SW21a and SW22 are switched over to contacts "a" thereof, and the switch SW4a is switched over to a contact "a" thereof. In this case, the transmitting radio signal, which is the phase-modulated signal from the voltage-controlled oscillator 17, is inputted to the power amplifier 19a including the amplitude modulator function via the band-pass filter 18a and the contact "a" of the switch SW4a. The power amplifier 19a including the amplitude modulator function amplifies the power of the inputted received radio signal, and modulates the amplitude of the inputted signal to generate, for example, a polar-modulated transmitting radio signal. Next, the generated transmitting radio signal is outputted to the antenna 11 via the contact "a" of the switch SW22, the low-pass filter 12a and the contact "a" of the switch SW21a, and then, is radiated by the antenna 11. On the other hand, during the reception in the first TDMA mode, the switch SW21a is switched over to a contact "e" thereof, and a radio signal received by the antenna 11 is inputted to the first TDMA mode receiver circuit 21 a via the contact "e" of the switch SW21a and the band-pass filter 14. Next, the first TDMA mode receiver circuit 21a executes signal processings on the inputted received radio signal, including high-frequency low-noise amplification, frequency conversion into an IF signal, demodulation and the like, to output a demodulated base band signal.

In addition, during the transmission of the second TDMA mode, the switch SW21a is switched over to a contact "c" thereof, the switch SW23 is switched over to the contact "a" thereof, and the switch SW4b is switched over to the contact "a" thereof. In this case, a frequency of the transmitting radio signal, which is the phase-modulated signal from the voltage-controlled oscillator 17, is divided by two by the frequency divider 25, and the divided transmitting radio signal is inputted to the power amplifier 19b including the amplitude modulator function via the band-pass filter 18b and the contact "a" of the switch SW4b. The power amplifier 19b including the amplitude modulator function amplifies the power of the inputted signal and modulates the amplitude of the inputted signal to generate, for example, a polar-modulated transmitting radio signal. Next, the generated transmitting radio signal is outputted to the antenna 11 via the contact "a" of the switch SW23, the low-pass filter 12b and the contact "c" of the switch SW21a, and then, is radiated by the antenna 11. On the other hand, during the reception of the second TDMA mode, the switch SW21a is switched over to a contact "f" thereof, and a radio signal received by the antenna 11 is inputted to the second TDMA mode receiver circuit 21b via the contact "f" of the switch SW21a and the band-pass filter 23. Next, the second TDMA mode receiver circuit 21b executes signal processings on the inputted received radio signal, including high-frequency low-noise amplification, frequency conversion into an IF signal, demodulation and the like, to output a demodulated base band signal.

Further, during the transmission and reception of the first CDMA mode, both the switches SW21a and SW22 are switched over to contacts "b" thereof, and the switch SW4a is switched over to the contact "a" thereof. In this case, the transmitting radio signal, which is the phase-modulated signal from the voltage-controlled oscillator 17, is inputted to the power amplifier 19a including the amplitude modulator function via the band-pass filter 18a and the contact "a" of the switch SW4a. The power amplifier 19a including the amplitude modulator function only amplifies the power of the inputted signal to generate, for example, an orthogonal-modulated transmitting radio signal such as a QPSK-modulated transmitting radio signal. Next, the generated transmitting radio signal is outputted to the antenna 11 via the contact "b" of the switch SW22, the band-pass filter 13a of the duplexer 13 and the contact "b" of the switch SW21a, and then, is radiated by the antenna 11. On the other hand, a radio signal received by the antenna 11 is inputted to the first CDMA mode receiver circuit 20a via the contact "b" of the switch SW21a and the band-pass filter 13b of the duplexer 13. Next, the first CDMA mode receiver circuit 20a executes signal processings on the inputted received radio signal, including high-frequency low-noise amplification, frequency conversion into an IF signal, demodulation and the like, to output a demodulated base band signal.

Still further, during the transmission and reception of the second CDMA mode, the switch SW21a is switched over to a contact "d" thereof, the switch SW23 is switched over to the contact "b" thereof and the switch SW4b is switched over to the contact "a" thereof. In this case, the frequency of the transmitting radio signal, which is the phase-modulated signal from the voltage-controlled oscillator 17, is divided by two by the frequency divider 25, and the divided transmitting radio signal is inputted to the power amplifier 19b including the amplitude modulator function via the band-pass filter 18b and the contact "a" of the switch SW4b. The power amplifier 19b including the amplitude modulator function only amplifies the power of the inputted signal to generate, for example, an orthogonal-modulated transmitting radio signal such as a QPSK-modulated transmitting radio signal. Next, the generated transmitting radio signal is outputted to the antenna 11 via the contact "b" of the switch SW22, the band-pass filter 22a of the duplexer 22 and the contact "d" of the switch SW21a, and then, is radiated by the antenna 11. On the other hand, a radio signal received by the antenna 11 is inputted to the second CDMA mode receiver circuit 20b via the contact "d" of the switch SW21a and the band-pass filter 22b of the duplexer 22. Next, the second CDMA mode receiver circuit 20b executes signal processings on the inputted received radio signal, including high-frequency low-noise amplification, frequency conversion into an IF signal, demodulation and the like, to output a demodulated base band signal.

In addition, during the transmission of the third TDMA mode, both the switches SW21a and SW22 are switched over to the contacts "a" thereof, and the switch SW4a is switched over to a contact "b" thereof. In this case, the transmitting radio signal, which is the phase-modulated signal from the voltage-controlled oscillator 17a, is inputted to the power amplifier 19a including the amplitude modulator function via the contact "b" of the switch SW4a. The power amplifier 19a including the amplitude modulator function amplifies the power of the inputted signal, and modulates the amplitude of the inputted signal to generate, for example, a polar-modulated transmitting radio signal. Next, the generated transmitting radio signal is outputted to the antenna 11 via the contact "a" of the switch SW22, the low-pass filter 12a and the contact "a" of the switch SW21a, and then, is radiated by the antenna 11. On the other hand, during the reception of the third TDMA mode, the switch SW21a is switched over to the contact "g" thereof, and a radio signal received by the antenna 11 is inputted to the third TDMA mode receiver circuit 21c via the contact "g" of the switch SW21a and the band-pass filter 26. Next, the third TDMA mode receiver circuit 21c executes signal processings on the inputted received radio signal, including high-frequency low-noise amplification, frequency conversion into an IF signal, demodulation and the like, to output a demodulated base band signal.

Further, during the transmission of the fourth TDMA mode, the switch SW21a is switched over to the contact "c" thereof, the switch SW23 is switched over to the contact "a" thereof, and the switch SW4b is switched over to the contact "b" thereof. In this case, a frequency of the transmitting radio signal, which is the phase-modulated signal from the voltage-controlled oscillator 17a, is divided by two by the frequency divider 25a, and the divided transmitting radio signal is inputted to the power amplifier 19b including the amplitude modulator function via the contact "b" of the switch SW4b. The power amplifier 19b including the amplitude modulator function amplifies the power of the inputted signal, and modulates the amplitude of the inputted signal to generate, for example, a polar-modulated transmitting radio signal. Next, the generated transmitting radio signal is outputted to the antenna 11 via the contact "a" of the switch SW23, the low-pass filter 12b and the contact "c" of the switch SW21a, and then, is radiated by the antenna 11. On the other hand, during the reception of the fourth TDMA mode, the switch SW21a is switched over to the contact "h" thereof, and a radio signal received by the antenna 11 is inputted to the fourth TDMA mode receiver circuit 21d via the contact "h" of the switch SW21a and the band-pass filter 27. Next, the fourth TDMA mode receiver circuit 21d executes signal processings on the inputted received radio signal, including high-frequency low-noise amplification, frequency conversion into an IF signal, demodulation and the like, to output a demodulated base band signal.

In the present preferred embodiment described above, the band-pass characteristic on the transmitting radio signal of the first TDMA mode is determined by those of the band-pass filter 18a and the low-pass filter 12a, and the band-pass characteristic on the transmitting radio signal of the second TDMA mode is determined by those of the band-pass filter 18b and the low-pass filter 12b. In addition, the band-pass characteristic on the transmitting radio signal of the first CDMA mode is determined by those of the band-pass filter 18a and the band-pass filter 13a, and the band-pass characteristic on the transmitting radio signal of the second CDMA mode is determined by those of the band-pass filter 18b and the band-pass filter 22a. Further, the band-pass filtering characteristic on the transmitting radio signal of the third TDMA mode is determined by that of the low-pass filter 12a, and the band-pass filtering characteristic on the transmitting radio signal of the fourth TDMA mode is determined by that of the low-pass filter 12b.

According to the fifth preferred embodiment constituted as described so far, there can be provided the radio communication apparatus having the four TDMA modes and the two CDMA modes that have, for example, the above stated relationship in the frequencies thereof. As an implemental example of the present radio communication apparatus, there can be provided a radio communication apparatus that has a quad-band of a GSM system and a dual band of an UMTS (Universal Mobile Telecommunications System) system. In manner similar to that of the above-described preferred embodiments, it is possible to reduce the noise components included in the transmitting radio signal to decrease the power consumption by utilizing the band-pass filters 18a and 18b even during the transmission of the TDMA mode. Further, in a manner similar to that of the above-described preferred embodiments, it is possible to miniaturize the radio transmitter circuit of a CDMA mode corresponding to and having the same transmission frequency as the transmission frequency of the certain TDMA mode. Still further, the number of the voltage-controlled oscillators 17 and 17a can be is decreased by two by employing the frequency dividers 25 and 25a, and this leads to miniaturization in the radio transmitter circuit used in the TDMA mode.

### MODIFIED PREFERRED EMBODIMENT OF FIFTH PREFERRED EMBODIMENT

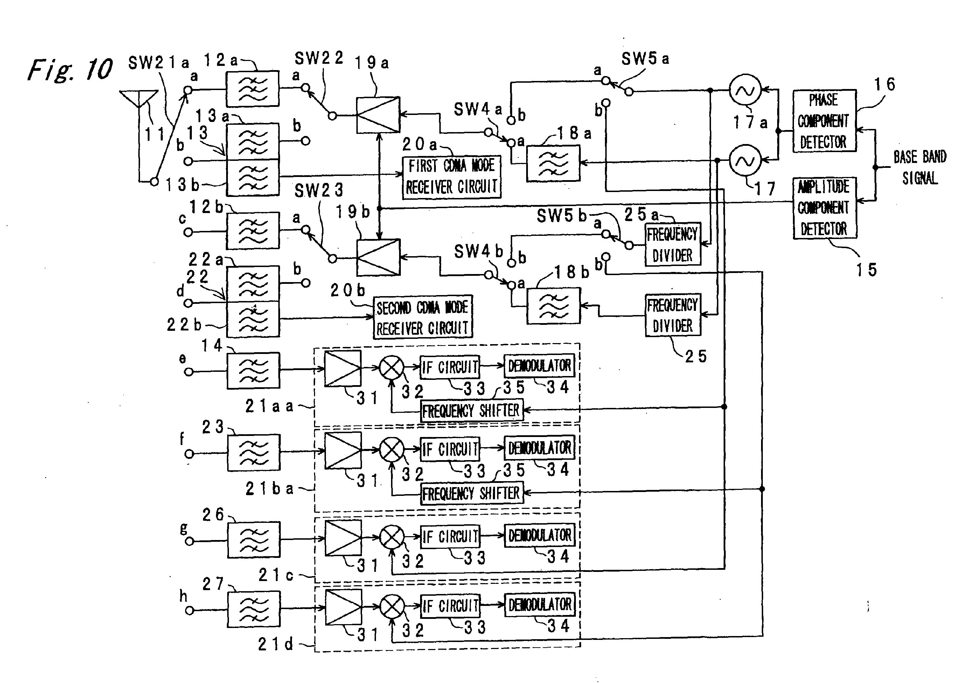

Fig. 10 is a block diagram showing a configuration of a radio communication apparatus according to a modified preferred embodiment of the fifth preferred embodiment of the present invention. The modified preferred embodiment of the fifth preferred embodiment is characterized in the configuration thereof is different from that of the fifth preferred embodiment in the following points:
(1) a switch SW5a is inserted at the subsequent stage of the voltage-controlled oscillator 17a, and a switch SW5b is inserted at a subsequent stage of the frequency divider 25a;
(2) a first TDMA mode receiver circuit 21aa further including a frequency shifter 35 is provided instead of the first TDMA mode receiver circuit 21a, and a second TDMA mode receiver circuit 21ba further including a frequency shifter 35 is provided instead of the second TDMA mode receiver circuit 21b;
(3) during the receptions of the first and third TDMA modes, the switch SW5a is switched over from a contact "a" thereof to a contact "b" thereof, the voltage-controlled oscillator 17a for executing phase modulation is set to a non-modulation state, and an oscillation signal from the voltage-controlled oscillator 17a (having a relatively high carrier wave to noise ratio) is used as local oscillation signals for the first and third TDMA mode receiver circuits 21 aa and 21c; and
(4) during the receptions of the second and fourth TDMA modes, the switch SW5b is switched over from a contact "a" thereof to a contact "b" thereof, the voltage-controlled oscillator 17a for executing phase modulation is set to the non-modulation state, and the oscillation signal from the voltage-controlled oscillator 17a (having a relatively high carrier wave to noise ratio) is used as local oscillation signal for the second and the fourth TDMA mode receiver circuits 21ba and 21d.

Differences between the present preferred embodiment and the fifth preferred embodiment will be described in detail hereinafter.

Referring to Fig. 10, each of the first TDMA mode receiver circuit 21aa and the second TDMA mode receiver circuit 21ba includes, in a manner similar to that of respective modified preferred embodiments of above-described preferred embodiments, the high-frequency low-noise amplifier 31, the mixer 32, the IF circuit 33, the demodulator 34 and the frequency shifter 35.

The switch SW5a is switched over to a contact "a" thereof during the transmission of the third TDMA mode, and is switched over to a contact "b" thereof during the receptions of the first and third TDMA modes. In the former case, during the transmission of the third TDMA mode, the phase-modulated signal from the voltage-controlled oscillator 17a is outputted to the power amplifier 19a including the amplitude modulator function via the contact "a" of the switch SW5a and the contact "b" of the switch SW4a. In the latter case, during the reception of the first TDMA mode, the phase-modulated signal from the voltage-controlled oscillator 17a is outputted as a local oscillation signal to the mixer 32 of the first TDMA mode receiver circuit 21aa via the contact "b" of the switch SW5a and the frequency shifter 35 (which is provided for shifting the frequency of the inputted signal into a local oscillation signal having a frequency slightly shifted from that of the local oscillation signal of the third TDMA mode) of the first TDMA mode receiver circuit 21aa. Further, in the latter case, during the reception of the third TDMA mode, the phase-modulated signal from the voltage-controlled oscillator 17a is outputted as a local oscillation signal to the mixer 32 of the third TDMA mode receiver circuit 21c via the contact "b" of the switch SW5a.

In addition, the switch SW5b is switched over to a contact "a" thereof during the transmission of the fourth TDMA mode, and is switched over to a contact "b" thereof during the receptions of the second and fourth TDMA modes. In the former case, during the transmission of the fourth TDMA mode, the phase-modulated signal from the voltage-controlled oscillator 17a is outputted to the power amplifier 19b including the amplitude modulator function, via the frequency divider 25a for dividing the frequency of the inputted signal by two to output a frequency-divided signal, the contact "a" of the switch SW5b and the contact "b" of the switch SW4b. In the latter case, during the reception of the second TDMA mode, the phase-modulated signal from the voltage-controlled oscillator 17a is outputted as a local oscillation signal to the mixer 32 of the second TDMA mode receiver circuit 21ba via the frequency divider 25a for dividing the frequency of the inputted signal by two to output a frequency-divided signal, the contact "b" of the switch SW5b and the frequency shifter 35 (which is provided for shifting the frequency of the inputted signal into a local oscillation signal having a frequency slightly shifted from that of the local oscillation signal of the fourth TDMA mode) of the second TDMA mode receiver circuit 21ba. Further, in the latter case, during the reception of the fourth TDMA mode, the phase-modulated signal from the voltage-controlled oscillator 17a is outputted as a local oscillation signal to the mixer 32 of the fourth TDMA mode receiver circuit 21d via the frequency divider 25a for dividing the frequency of the inputted signal by two to output a frequency-divided signal, and the contact "b" of the switch SW5b.

As described so far, the modified preferred embodiment of the fifth preferred embodiment exhibits not only the functions and advantageous effects according to the fifth preferred embodiment, but also such a unique advantageous effect that the number of oscillators provided in radio the receiver circuit can be reduced by two, and the configuration of the radio communication apparatus can be simplified by using the oscillation signal from the voltage-controlled oscillator 17a as the local oscillation signals for the first and third TDMA mode receiver circuits 21 aa and 21 c, dividing the frequency of the oscillation signal from the voltage-controlled oscillator 17a by two by the frequency divider 25a, and using the frequency-divided oscillation signal as the local oscillation signals for the second and the fourth TDMA mode receiver circuits 21ba and 21d.

In cases where a further CDMA mode or a plurality of CDMA modes are further added in the fifth preferred embodiment and the modified preferred embodiment thereof, in a similar manner to that of the third preferred embodiment, the duplexers 13 and 22, the CDMA mode receiver circuits 20a and 20b, and the band-pass filters 18a and 18b can be implemented by further providing the components used in the additional CDMA mode. In cases where a further TDMA mode or a plurality of TDMA modes are further added, in a similar manner to that of the fifth preferred embodiment, the duplexers 14, 23, 26 and 27, TDMA mode receiver circuits 21 a, 21 b, 21c and 21d, and band-pass filters 18a and 18b can be implemented by further providing the components used in the additional TDMA mode.

### OTHER MODIFIED PREFERRED EMBODIMENTS

In the foregoing preferred embodiments and the modified preferred embodiments thereof, the multi-mode radio communication apparatuses are described. However, the present invention is not limited to the radio communication apparatuses, and can be applied to a communication apparatus such as a cable communication apparatus for transmitting and receiving a signal via an optical fiber cable or a coaxial cable. In other words, the radio transmitter circuit may be a transmitter circuit such as a wire transmitter circuit, and the same thing is true for to the receiver circuit.

In the foregoing embodiments, various kinds of band-pass filters are employed. However, the present invention is not limited to this, and there may be used filtering means such as a band-stop filter, a low-pass filter, a high-pass filter, or the like capable of executing the above-mentioned operation.

In the foregoing embodiments, various types of low-pass filters of are employed. However, the present invention is not limited to this, and there may be used filtering means such as a band-stop filter, a band-pass filter, or the like capable of executing the above-mentioned operation.

As thus far described, according to the present invention, in order to reduce the signal to noise ratio in the multi-mode transmitter circuit, the filtering means that attenuates the frequency band component other than the transmission frequency band of the phase-modulated signal outputted from the phase modulating means, filters the attenuated phase-modulated signal to pass therethrough and output the same filtered phase-modulated signal is inserted between the output terminal of each of the phase modulating means and the input terminal of each of the amplitude modulating means. Accordingly, there can be the multi-mode transmitter circuit having the TDMA and the CDMA modes, capable of decreasing its size as compared with that of a multi-mode transmitter circuit according to the prior art, and capable of reducing the current consumption lower than that of the multi-mode transmitter circuit according to the prior art. Further, there can be implemented the multi-mode transceiver circuit including the multi-mode receiver circuit in addition to the multi-mode transmitter circuit, and further, there can be implemented the radio communication apparatus including the multi-mode transceiver circuit.

Although the present invention has been fully described in connection with the preferred embodiments thereof with reference to the accompanying with drawings, it is to be noted that various changes and modifications are apparent to those skilled in the art. Such changes and modifications are to be understood as included within the scope of the present invention as defined by the appended claims unless they depart therefrom.

## Claims

1. A multi-mode transmitter circuit for selectively switching over between at least one TDMA mode and at least one CDMA mode, a transmission frequency of the CDMA mode being substantially identical to that of the TDMA mode, said circuit comprising:
phase modulating means for, in the TDMA mode and the CDMA mode, generating a phase-modulated signal by modulating a phase of a carrier wave signal according to an inputted signal to be modulated, and outputting the phase-modulated signal;
filtering means for, in the TDMA mode and the CDMA mode, attenuating frequency band components other than a transmission frequency band of the phase-modulated signal outputted from said phase modulating means, and filtering an attenuated phase-modulated signal to pass therethrough and output a filtered phase-modulated signal; and
amplitude modulating means for executing the following steps of:
(a) in the TDMA mode, generating a transmitting radio signal by modulating an amplitude of the phase-modulated signal outputted from said filtering means according to an amplitude component of the inputted signal to be modulated, and outputting the transmitting radio signal; and
(b) in the CDMA mode, outputting the phase-modulated signal outputted from said filtering means as a transmitting radio signal.

2. A multi-mode transmitter circuit for selectively switching over between a plurality of TDMA modes including first and second TDMA modes that are different from each other and at least one CDMA mode, a transmission frequency of the CDMA mode being substantially identical to that of the first TDMA mode, said circuit comprising:
first phase modulating means for, in the first TDMA mode and the CDMA mode, generating a phase-modulated signal by modulating a phase of a carrier wave signal according to an inputted signal to be modulated, and outputting the phase-modulated signal;
second phase modulating means for, in the second TDMA mode, generating a phase-modulated signal by modulating a phase of a carrier wave signal according to the inputted signal to be modulated, and outputting the phase-modulated signal;
filtering means for, in the first TDMA mode and the CDMA mode, attenuating frequency band components other than a transmission frequency band of the phase-modulated signal outputted from said first phase modulating means, and filtering an attenuated phase-modulated signal to pass therethrough and output a filtered phase-modulated signal;
first amplitude modulating means for executing the following steps of:
(a) in the first TDMA mode, generating a transmitting radio signal by modulating an amplitude of the phase-modulated signal outputted from said filtering means according to an amplitude component of the inputted signal to be modulated, and outputting the transmitting radio signal; and
(b) in the CDMA mode, outputting the phase-modulated signal outputted from said filtering means as a transmitting radio signal; and
second amplitude modulating means for, in the second TDMA mode, generating a transmitting radio signal by modulating an amplitude of the phase-modulated signal outputted from said second phase modulating means according to the amplitude component of the inputted signal to be modulated, and outputting the transmitting radio signal.

3. The multi-mode transmitter circuit as claimed in claim 2,
wherein said first amplitude modulating means and said second amplitude modulating means shares one amplitude modulating means.

4. A multi-mode transmitter circuit for selectively switching over between a plurality of TDMA modes including first and second TDMA modes that are different from each other and a plurality of CDMA modes including first and second CDMA modes that are different from each other, transmission frequencies of the first and second CDMA modes being substantially identical to those of the first and second TDMA modes, respectively, said circuit comprising:
phase modulating means for, in the first and second TDMA modes and the first and second CDMA modes, generating a phase-modulated signal by modulating a phase of a carrier wave signal according to an inputted signal to be modulated, and outputting the phase-modulated signal;
first filtering means for, in the first TDMA mode and the first CDMA mode, attenuating frequency band components other than a transmission frequency band of the phase-modulated signal outputted from said phase modulating means, and filtering an attenuated phase-modulated signal to pass therethrough and output a filtered phase-modulated signal;
second filtering means for, in the second TDMA mode and the second CDMA mode, attenuating frequency band components other than a transmission frequency band of the phase-modulated signal outputted from said phase modulating means, and filtering an attenuated phase-modulated signal to pass therethrough and output a filtered phase-modulated signal; and
amplitude modulating means for executing the following steps of:
(a) in the first TDMA mode, generating a transmitting radio signal by modulating an amplitude of the phase-modulated signal outputted from said first filtering means according to an amplitude component of the inputted signal to be modulated, and outputting the transmitting radio signal;
(b) in the second TDMA mode, generating a transmitting radio signal by modulating an amplitude of the phase-modulated signal outputted from said second filtering means according to the amplitude component of an inputted signal to be modulated, and outputting the transmitting radio signal;
(c) in the first CDMA mode, outputting the phase-modulated signal outputted from said first filtering means as a transmitting radio signal; and
(d) in the second CDMA mode, outputting the phase-modulated signal outputted from said second filtering means as a transmitting radio signal.

5. A multi-mode transmitter circuit for selectively switching over between a plurality of TDMA modes including first and second TDMA modes, and a plurality of CDMA modes including first and second CDMA modes that are different from each other,
wherein a transmission frequency of the second TDMA mode is substantially half a transmission frequency of the first TDMA mode, and transmission frequencies of the first and second CDMA modes are substantially identical to those of the first and second TDMA modes, respectively,
wherein said circuit comprises:
phase modulating means for, in the first and second TDMA modes and the first and second CDMA modes, generating a phase-modulated signal by modulating a phase of a carrier wave signal according to an inputted signal to be modulated, and outputting the phase-modulated signal;
frequency dividing means for dividing a frequency of the phase-modulated signal outputted from said phase modulating means into half the frequency thereof, and outputting a frequency-divided phase-modulated signal;
first filtering means for, in the first TDMA mode and the first CDMA mode, attenuating frequency band components other than a transmission frequency band of the phase-modulated signal outputted from said phase modulating means, and filtering an attenuated phase-modulated signal to pass therethrough and output a filtered phase-modulated signal;
first amplitude modulating means for executing the following steps of:
(a) in the first TDMA mode, generating a transmitting radio signal by modulating an amplitude of the phase-modulated signal outputted from said first filtering means according to an amplitude component of the inputted signal to be modulated, and outputting the transmitting radio signal; and
(b) in the first CDMA mode, outputting the phase-modulated signal outputted from said first filtering means as a transmitting radio signal; and
second amplitude modulating means for executing the following steps of:
(a) in the second TDMA mode, generating a transmitting radio signal by modulating an amplitude of the frequency-divided phase-modulated signal outputted from said frequency dividing means according to the amplitude component of the inputted signal to be modulated, and outputting the transmitting radio signal; and
(b) in the second CDMA mode, outputting the frequency-divided phase-modulated signal outputted from said frequency dividing means as a transmitting radio signal.

6. A multi-mode transmitter circuit for selectively switching over between a plurality of TDMA modes including first, second, third and fourth TDMA modes, and a plurality of CDMA modes including first and second CDMA modes that are different from each other,
wherein a transmission frequency of the second TDMA mode is substantially half a transmission frequency of the first TDMA mode,
wherein a transmission frequency of the third TDMA mode is shifted from that of the first TDMA mode by a predetermined first frequency shift amount,
wherein a transmission frequency of the fourth TDMA mode is shifted from that of the second TDMA mode by a predetermined second frequency shift amount,
wherein transmission frequencies of the first and second CDMA modes are substantially identical to the transmission frequencies of the first and second TDMA modes, respectively, and
wherein said circuit comprises:
first phase modulating means for, in the first and second TDMA modes and the first and second CDMA modes, generating a phase-modulated signal by modulating a phase of a carrier wave signal according to an inputted signal to be modulated, and outputting the phase-modulated signal;
second phase modulating means for, in the third and fourth TDMA modes, generating a phase-modulated signal by modulating a phase of a carrier wave signal according to the inputted signal to be modulated, and outputting the phase-modulated signal;
first frequency dividing means for dividing a frequency of the phase-modulated signal outputted from said first phase modulating means into half the frequency thereof, and outputting a frequency-divided phase-modulated signal;
second frequency dividing means for dividing a frequency of the phase-modulated signal outputted from said second phase modulating means into half the frequency thereof, and outputting a frequency-divided phase-modulated signal;
first filtering means for, in the first TDMA mode and the first CDMA mode, attenuating frequency band components other than a transmission frequency band of the phase-modulated signal outputted from said first phase modulating means, and filtering an attenuated phase-modulated signal to pass therethrough and output a filtered phase-modulated signal;
first amplitude modulating means for executing the following steps of:
(a) in the first TDMA mode, generating a transmitting radio signal by modulating an amplitude of the phase-modulated signal outputted from said first filtering means according to an amplitude component of the inputted signal to be modulated, and outputting the transmitting radio signal;
(b) in the first CDMA mode, outputting the phase-modulated signal outputted from said first filtering means; and
(c) in the third TDMA mode, generating a transmitting radio signal by modulating an amplitude of the phase-modulated signal outputted from said second phase modulating means according to the amplitude component of the inputted signal to be modulated, and outputting the transmitting radio signal;
second filtering means for, in the second TDMA mode and the second CDMA mode, attenuating frequency band components other than a transmission frequency band of the frequency-divided phase-modulated signal outputted from said first frequency dividing means, and filtering an attenuated phase-modulated signal to pass therethrough and output a filtered phase-modulated signal; and
second amplitude modulating means for executing the following steps of:
(a) in the second TDMA mode, generating a transmitting radio signal by modulating an amplitude of the phase-modulated signal outputted from said second filtering means according to the amplitude component of the inputted signal to be modulated, and outputting the transmitting radio signal;
(b) in the second CDMA mode, outputting the phase-modulated signal outputted from said second filtering means; and
(c) in the fourth TDMA mode, generating a transmitting radio signal by modulating an amplitude of the frequency-divided phase-modulated signal outputted from said second frequency dividing means according to the amplitude component of the inputted signal to be modulated, and outputting the transmitting radio signal.

7. The multi-mode transmitter circuit as claimed in any of claims 1 to 6,
wherein each of said filtering means is one of a band-pass filter and a band stop filter.

8. A multi-mode transceiver circuit comprising:
said multi-mode transmitter circuit as claimed in any of claims 1 to 7; and
a multi-mode receiver circuit for, in the respective TDMA modes and the respective CDMA modes, receiving a radio signal, frequency-converting a received radio signal, and demodulating a frequency-converted received radio signal.

9. The multi-mode transceiver circuit as claimed in claim 8,
wherein the multi-mode receiver circuit uses one of phase-modulated signals outputted from said respective phase modulating means and frequency-divided phase-modulated signals outputted from said respective frequency dividing means as a local oscillation signal for the frequency conversion.

10. A radio communication apparatus comprising:
said multi-mode transceiver circuit as claimed in claim 8 or 9; and
an antenna for transmitting and receiving a radio signal,
wherein the multi-mode receiver circuit receives a received radio signal received by said antenna, converts a frequency of the received radio signal, and demodulates a frequency-converted received radio signal, and
wherein said multi-mode transmitter circuit outputs the transmitting radio signal outputted from said multi-mode transmitter circuit to said antenna so as to radiate the transmitting radio signal through said antenna.
